# EUROPÄISCHE PATENTSCHRIFT

(11) **EP 2 428 259 B1**
(45) Veröffentlichungstag und Bekanntmachung des Hinweises auf die Patenterteilung: **16.05.2018**
(21) Anmeldenummer: 11180556.0
(22) Anmeldetag: 08.09.2011
(51) Int. Cl.: C02F 103/00, C02F 1/00, E03F 5/14

(54) **ABWASSERBEHANDLUNGSVORRICHTUNG UND ABWASSERBEHANDLUNGSANLAGE MIT EINER DERARTIGEN ABWASSERBEHANDLUNGSVORRICHTUNG**
WASTEWATER TREATMENT DEVICE AND WASTEWATER TREATMENT ASSEMBLY WITH SUCH A WASTEWATER TREATMENT DEVICE
DISPOSITIF DE TRAITEMENT DES EAUX USÉES ET INSTALLATION DE TRAITEMENT DES EAUX USÉES DOTÉE D'UN TEL DISPOSITIF DE TRAITEMENT DES EAUX USÉES

(30) Priorität: 13.09.2010 DE 102010040645
(43) Veröffentlichungstag der Anmeldung: 14.03.2012
(73) Patentinhaber: FRÄNKISCHE ROHRWERKE Gebr. Kirchner GmbH & Co. KG, 97486 Königsberg (DE)
(72) Erfinder: Schütz, Michael, 97475 Zeil am Main (DE); Adams, Dietmar, 01328 Dresden (DE)
(74) Vertreter: Weickmann & Weickmann PartmbB

(56) Entgegenhaltungen:
- WO-A1-2010/023656
- DE-A1- 4 446 141
- DE-U1-202006 002 684
- US-A- 4 913 815
- US-A- 5 851 389
- US-A- 6 086 754

## Beschreibung

Die Erfindung betrifft eine Abwasserbehandlungsvorrichtung zum Behandeln von Abwasser, insbesondere Regenwasser.

Eine solche Abwasserbehandlungsvorrichtung ist bereits aus dem "Handbuch zur Regenwasserbewirtschaftung - Reinigen, Versickern, Rückhalten, Nutzen, Stand 07/2009" der Anmelderin bekannt. Auf den Seiten 22 und 23 dieses Handbuchs wird eine derartige, unter der Bezeichnung "Sedi®-substrator" angebotene Abwasserbehandlungsvorrichtung beschrieben, welche strömungstechnisch zwischen einem Sedimentationsrohr und einer Versickerungsrigole angeordnet ist.

Das Sedimentationsrohr bildet dabei eine erste Reinigungsstufe der Gesamtanlage und dient zum Rückhalt sedimentierbarer Stoffe. Bei den sedimentierbaren Stoffen, die von dem Sedimentationsrohr zurückgehalten werden, handelt es sich neben relativ groben Partikel, wie etwa Sand, auch um feinere Kornfraktionen, insbesondere um Kornfraktionen aus dem so genannten "Schlämmkornbereich" mit einem Partikeldurchmesser von etwa 0,002 mm bis etwa 0,063 mm. Aufgrund der großen Gesamtoberfläche aller Partikel dieser Kornfraktionen sind diese hauptsächlich die Träger von Schadstoffen, die mit dem Regenwasser etwa von Straßenverkehrsflächen abgespült

werden, wie z.B. in Verbrennungsrückständen enthaltene polyzyklische aromatische Kohlenwasserstoffe (PAK), im Abrieb von Bremsen und Reifen enthaltene Schwermetalle oder in Tropfölverlusten enthaltene Mineralölkohlenwasserstoffe.

Das durch das Sedimentationsrohr vorgereinigte Abwasser wird dann der eigentlichen Abwasserbehandlungsvorrichtung zugeführt, deren Filtereinrichtung eine zweite Reinigungsstufe der Gesamtanlage bildet, zum Ad- bzw. Absorbieren von im Abwasser noch verbliebenen Fremdstoffen. Dabei ist die Filtereinrichtung hauptsächlich dazu gedacht, gelöste Stoffe zurückzuhalten, welche physikalisch aufgrund von Dichteunterschieden nicht sedimentierbar sind, wie z.B. gelöste Schwermetalle oder feinste, freie Ölpartikel. Darüber hinaus werden durch die Filtereinrichtung auch in geringem Maße Feststoffe zurückgehalten, die aus verschiedenen Gründen in der ersten Reinigungsstufe nicht abgeschieden wurden, z.B. weil bei einem starken Regenereignis die Aufenthaltszeit nicht groß genug war und dadurch Anteile der zugeflossenen Partikelfracht aus der ersten Reinigungsstufe wieder ausgetragen wurden. Hierdurch kann es im Laufe der Zeit zum Zusetzen des Filters kommen.

Das Gehäuse der Filtereinrichtung weist beim Sedi®-substrator im Wesentlichen die Form eines geraden Kreiszylinders bzw. Hohlzylinders auf, wobei das Gehäuse zur Aufnahme des eigentlichen Filtermediums, etwa eines Filtersubstrats, dient. Das Gehäuse weist in seiner äußeren und in seiner inneren Umfangswandung eine Mehrzahl von Öffnungen auf, durch welche das zu behandelnde Abwasser in das Gehäuse eintreten, bzw. aus diesem austreten kann. Das Filtersubstrat wird dabei im Inneren des hohlzylinderförmigen Filtergehäuses aufgenommen. Die Zylinderachse der Filtereinrichtung ist in vertikaler Richtung orientiert, so dass sich die Filtereinrichtung leicht von oben in einen Schacht einführen bzw. aus diesem entfernen lässt. Nach dem Durchströmen des Filtermediums fließt das Abwasser dann zum Abwasserablauf der Abwasserbehandlungsvorrichtung, welcher beispielsweise mit einer Rigole oder einem Oberflächengewässer in Strömungsverbindung steht.

Von besonderer Bedeutung bei der aus dem Stand der Technik bekannten Abwasserbehandlungsvorrichtung ist, dass die Filtergehäusewandung lediglich in im Wesentlichen horizontaler Richtung allseitig von dem zu behandelnden Abwasser durchströmbar ausgebildet ist bzw. angeströmt wird. Das bedeutet beim Sedi®-substrator, dass das Abwasser über den gesamten Umfang der sich im Wesentlichen vertikal erstreckenden Außenmantelfläche des Filtergehäuses in die Filtereinrichtung eintritt. Somit können sich die durch das einströmende Abwasser und durch den hydraulischen Widerstand des Filtermediums hervorgerufenen, auf die Filtereinrichtung wirkenden Reaktionskräfte im Wesentlichen gegenseitig aufheben, wodurch die Notwendigkeit entfällt, die Filtereinrichtung gegen die Reaktionskräfte mit entsprechend stark ausgelegten Befestigungsmitteln zu arretieren, oder den Zustrom des von der Filtereinrichtung zu behandelnden Abwassers künstlich zu drosseln, um die Reaktionskräfte aufnehmen bzw. vermindern zu können. Ohne derartige Befestigungsmittel, d.h. ohne entsprechend stark ausgelegte Befestigungsmittel, kann das Filtermedium in der Filtereinrichtung schnell und unkompliziert ausgewechselt werden. Insbesondere kann ein Hinabsteigen zu der Filtereinrichtung vermieden werden, um dort die Befestigungsmittel, welche die Filtereinrichtung halten, zu lösen, was einen besonders einfachen und kostengünstigen Betrieb der Abwasserbehandlungsvorrichtung erlaubt.

Ein derart einfacher Wechsel des Filtermediums ist hingegen bei diversen anderen Abwasserbehandlungsvorrichtungen aus dem Stand der Technik, wie beispielsweise bei jener, die aus der US 2006/0163147 bekannt ist, nicht möglich, da hier ein im Wesentlichen scheibenförmig ausgebildetes Filtermedium in vertikaler Richtung von unten nach oben von dem zu behandelnden Abwasser durchströmt wird, so dass bei entsprechendem Abwasserdurchsatz nicht zu vernachlässigende Kräfte in vertikale Richtung auf das Filtermedium wirken. Das Filtermedium muss daher zwangsläufig mit entsprechend stark ausgelegten Befestigungsmitteln an der restlichen Abwasserbehandlungsvorrichtung arretiert werden, um es gegen die Gefahr von Aufschwimmen zu sichern. Ein Auswechseln des Filtermediums ist somit verhältnismäßig aufwändig.

Aus der WO 2010/023656 ist ein Filter bekannt, der einen Zulauf und einen Ablauf umfasst, wobei zwischen dem Zulauf und dem Ablauf in einem Gehäuse ein Filtermedium aufgenommen ist, wobei die Wandung des Gehäuses in horizontaler Richtung allseitig durchströmbar ist und die untere Kante des Ablaufs oberhalb des oberen Rands des Gehäuses angeordnet ist.

Außerdem ist aus der DE 20 2006 002 684 U1 eine Abwasserbehandlungsvorrichtung mit einem Zulauf und einem Ablauf bekannt, sowie einem zwischen dem Zulauf und dem Ablauf angeordneten Filter, der aus einem Gehäuse mit einem darin aufgenommenen Filtermedium besteht und auf eine Zwischenwandung aufsteht.

Derartige Filter sind ferner ebenfalls aus der US 4 913 815 A und der US 6 086 754 A bekannt.

Nachteilig bei der eingangs genannten Abwasserbehandlungsvorrichtung ist jedoch, dass die Wandung des das Filtermedium aufnehmenden Gehäuses nicht stets über die gesamte Höhe von dem durch das Filtermedium zu behandelnden Abwasser angeströmt wird, sondern dass die Höhe vielmehr in Abhängigkeit von der jeweiligen Zuflussmenge an zu reinigendem Abwasser, insbesondere Regenwasser, stark variieren kann. Wenn es über längere Zeit hinweg stark regnet, wird der Pegel des die Filtereinrichtung umgebenden Regenwassers auf ein höheres Niveau ansteigen, als zu Zeiten, in denen es für längere Zeit gar nicht oder wenig regnet. Dies hat jedoch zur Folge, dass die in Höhenrichtung weiter oben gelegenen Bereiche des Filtermediums deutlich weniger beansprucht werden und sich somit deutlich langsamer durch Feststoffe zusetzen, als die in Höhenrichtung weiter unten gelegenen Bereiche des Filtermediums. Hat sich jedoch der untere Bereich des Filtermediums durch Feststoffe mit der Zeit derart stark zugesetzt, dass die Ad- bzw. Absorptionsfähigkeit des Filtermediums dort einen unzulässigen Wert überschreitet, so muss das Filtermedium ausgewechselt werden, obwohl höher gelegene Bereiche des Filtermediums womöglich noch länger im Einsatz hätten bleiben können. Andernfalls könnte nicht sichergestellt werden, dass die Leistungsfähigkeit der Filtereinrichtung auch bei einem Starkregenereignis, bei welchem die gesamte Außenoberfläche des Filters benötigt wird, ausreicht.

Ferner kann nicht ausgeschlossen werden, dass, wenn es beispielsweise über längere Zeit hinweg kein Starkregenereignis gibt, die in Höhenrichtung weiter oben gelegenen Bereiche des Filtermediums trocken fallen, d.h. austrocknen. Somit könnten unter Umständen Risse im Filtermedium entstehen, durch welche das Abwasser beim nächsten Starkregenereignis ungehindert hindurchströmt, ohne dass der Filter seine Ad- bzw. Absorptionsfähigkeit voll zum Einsatz bringen kann.

Es ist daher Aufgabe der vorliegenden Erfindung, die Abwasserbehandlungsvorrichtung der eingangs genannten Art, bei welcher die Filtergehäusewandung lediglich in im Wesentlichen horizontaler Richtung allseits von dem zu behandelnden Abwasser durchströmbar ausgebildet ist, so dass ein schnelles und unkompliziertes Wechseln des Filtermediums möglich ist, dahingehend weiterzubilden, dass die oben genannten Nachteile vermieden oder zumindest deutlich reduziert werden, d.h. insbesondere, dass das Filtermedium möglichst überall stets gleichmäßig stark beansprucht wird, um somit die mögliche Einsatzzeit des Filtermediums optimieren zu können.

Diese Aufgabe wird erfindungsgemäß durch eine Abwasserbehandlungsvorrichtung nach Anspruch 1 gelöst, bei welcher eine untere Kante des Abwasserablaufs in Höhenrichtung über dem oberen Rand des Gehäuses der wenigstens einen Filtereinrichtung angeordnet ist, allenfalls jedoch auf gleicher Höhe.

Um zu verhindern, dass es wieder zu einer Durchmischung des bereits von der Filtereinrichtung gefilterten Abwassers mit noch ungefiltertem Abwasser kommt, weist die Abwasserbehandlungsvorrichtung ferner eine Zwischenwandung oder/und einen Sockel auf, auf der bzw. dem die wenigstens eine Filtereinrichtung aufsteht, wobei eine in der Zwischenwandung bzw. dem Sockel vorgesehene Öffnung mit einer Ablauföffnung der wenigstens einen Filtereinrichtung in Strömungsverbindung steht. Es sei angemerkt, dass prinzipiell natürlich auch mehrere in der Zwischenwandung bzw. dem Sockel vorgesehene Öffnungen jeweils mit mehreren Ablauföffnungen der wenigstens einen Filtereinrichtung in Strömungsverbindung stehen können.Durch das Vorsehen dieser Zwischenwandung bzw. dieses Sockels wird eine Trennung des sich im Wesentlichen oberhalb der Zwischenwandung bzw. des Sockels befindlichen, noch ungefilterten Abwassers von dem sich im Wesentlichen unterhalb der Zwischenwandung bzw. des Sockels befindlichen, bereits gefilterten Abwasser erreicht. Eine Durchmischung wird somit ausgeschlossen.

Um das bereits von der Filtereinrichtung gereinigte Abwasser zu dem Abwasserablauf führen zu können, dessen untere Kante in Höhenrichtung über dem oberen Rand des Gehäuses der wenigstens einen Filtereinrichtung angeordnet ist, allenfalls jedoch auf gleicher Höhe, ist ein Steigrohr vorgesehen, welches von der Zwischenwandung bzw. dem Sockel nach oben absteht und mit dem Abwasserablauf verbunden ist. Durch dieses Steigrohr kann das unterhalb der Zwischenwandung bzw. dem Sockel gesammelte, bereits gereinigte Abwasser nach oben zum Abwasserablauf aufsteigen, ohne dass dabei die Gefahr einer Durchmischung mit noch nicht gereinigtem Abwasser besteht.

Dabei weist das Steigrohr einen Abschnitt auf, der von einem zum Abwasserablauf führenden Abschnitt abzweigt. Durch diesen Abschnitt ist es beispielsweise möglich, von oben durch einen Wartungsschacht im laufenden Betrieb der Abwasserbehandlungsvorrichtung Proben von dem gereinigten Abwasser zu entnehmen, oder aber zu Wartungszwecken eine Reinigungsvorrichtung durch das Steigrohr nach unten zu dem sich unterhalb der Zwischenwandung bzw. des Sockels befindlichen Raum einzuführen.

Der abzweigende Abschnitt ist nach oben offen ausgebildet, so kann dieser auch zur permanenten Be- bzw. Entlüftung des unterhalb der Zwischenwandung bzw. des Sockels angeordneten Raums dienen und somit verhindern, dass womöglich eine aus einer Druckdifferenz resultierende Kraft auf die Zwischenwandung bzw. den Sockel wirkt. Auch kann diese Öffnung als Notüberlauf dienen, um sicherstellen zu können, dass das Abwasser die erfindungsgemäße Abwasserbehandlungsvorrichtung auch in einer Extremsituation, etwa einem Starkregenereignis, wie es beispielsweise höchstens alle fünf bis zehn Jahre einmal vorkommt, verlassen kann, so dass es zu keinem Rückstau in Abschnitten eines Kanalsystems kommt, die der Abwasserbehandlungsvorrichtung strömungstechnisch vorgelagert sind. Jedoch ist hierzu in Kauf zu nehmen, dass das die Abwasserbehandlungsvorrichtung über den abzweigenden Abschnitt verlassende Abwasser nicht von der Filtereinrichtung gereinigt wird.Wird ein solcher, nach oben offener Abschnitt als Notüberlauf verwendet, so kann auf das Vorsehen der oben beschriebenen Überlaufleitung verzichtet werden.

Durch die erfindungsgemäße Abwasserbehandlungsvorrichtung kann sichergestellt werden, dass die das Filtermedium umfassende Filtereinrichtung, zumindest in einem Normalbetriebszustand, d.h. in einem Betriebszustand, in dem der Abwasserbehandlungsvorrichtung über den Abwasserzulauf im Wesentlichen kontinuierlich zu behandelndes Abwasser in einer nicht nur zu vernachlässigenden Menge pro Zeiteinheit zugeführt wird, im Dauerstau betrieben wird, d.h. dass das Filtermedium, zumindest im Normalbetriebszustand, stets über seine gesamte Höhenrichtung hinweg von dem von ihm zu behandelnden Abwasser angeströmt wird. Somit wird die Gefahr reduziert, dass sich die Ad- bzw. Absorptionsfähigkeit bestimmter Bereiche des Filtermediums über die Zeit hinweg stärker verschlechtert als in anderen Bereichen, etwa durch eine übermäßige Beanspruchung oder durch ein Trockenfallen dieser Bereiche im Normalbetriebszustand.

Es sei angemerkt, dass zur Erreichung des zuvor genannten Dauerstaus ein Zurückströmen des Abwassers aus der Abwasserbehandlungsvorrichtung durch ihren Abwasserzulauf selbstverständlich nicht vorgesehen ist. Ein solches Zurückströmen kann zum Beispiel auf einfache Weise dadurch verhindert werden, dass ein der Abwasserbehandlungsvorrichtung strömungstechnisch vorgelagerter Bereich einen Zulauf aufweist, welcher in Höhenrichtung über der unteren Kante des Abwasserablaufs angeordnet ist, allenfalls jedoch auf gleicher Höhe.

Bei der erfindungsgemäßen Abwasserbehandlungsvorrichtung wird, wie auch bei dem aus dem Stand der Technik bekannten "Sedi®-substrator", die Filtereinrichtung zweckmäßiger Weise in einem den Abwasserzulauf und den Abwasserablauf umfassenden Schacht angeordnet sein. Dabei kann das Volumen dieses Schachts als Puffervolumen für das zu behandelnde Abwasser, etwa bei einem Starkregenereignis, zur Verfügung stehen. Vorzugsweise ist, zumindest im Normalbetriebszustand der Abwasserbehandlungsvorrichtung, das Volumen dieses Schachts jedoch bis zu einer Überlaufkante ständig mit Abwasser gefüllt. Zusätzlich oder alternativ ist es aber auch denkbar, eine mit dem Schacht in Flüssigkeitsaustauschverbindung stehende, abgedichtete Rigole als weiteren Pufferspeicher vorzusehen.

Da im Betrieb keine nennenswerten Kräfte, insbesondere keine Auftriebskräfte auf das Filtermedium wirken, welche zu einer Lageveränderung der Filtereinrichtung führen könnten, muss das das Filtermedium aufnehmende Filtergehäuse nicht durch mechanische Befestigungsmittel an der restlichen Abwasserbehandlungsvorrichtung arretiert werden. Das ist insbesondere von Vorteil, weil beim Austauschen der Filtereinrichtung auch keine solchen Arretierungen gelöst werden müssen. Dies würde ansonsten entweder ein Einsteigen in den die Filtereinrichtung umgebenen Schacht erfordern, was nur mit entsprechenden Sicherheitsvorkehrungen geschehen darf und einen entsprechend großen Einstiegsschacht erfordert, oder aufwändige Konstruktionen zum Lösen der Arretierungen erfordern, die von oben, d.h. von außerhalb des Schachts, bedienbar sind. Da das Filtermedium eine höhere durchschnittliche Dichte als Wasser hat, reicht bei der Abwasserbehandlungsvorrichtung gemäß der vorliegenden Erfindung schon die Schwerkraft aus, um die Filtereinrichtung sicher an Ort und Stelle zu halten.

Um ferner sicherstellen zu können, dass die lediglich in im Wesentlichen horizontaler Richtung allseits von dem zu behandelnden Abwasser anströmbare Filtergehäusewandung auch tatsächlich entsprechend an- bzw. durchströmt wird, so dass in Summe keine nennenswerten Kräfte auf die wenigstens eine Filtereinrichtung resultieren, ist die wenigstens eine Filtereinrichtung längs ihrer gesamten Umfangsfläche um eine im Wesentlichen vertikal verlaufende Achse von Abwasser umgeben. Beispielsweise kann das Gehäuse der wenigstens einen Filtereinrichtung im Wesentlichen zylinderförmig ausgebildet sein, wobei sich die Zylinderachse im Wesentlichen vertikal erstreckt. Laut der allgemeinen Definition eines Zylinders entsteht dieser durch Verschiebung einer in einer Ebene liegenden, in sich geschlossenen Kurve entlang einer Geraden, die nicht in dieser Ebene liegt. Um eine möglichst gleichmäßige Anströmung des zu filternden Abwassers zu ermöglichen, ist es jedoch vorteilhaft, wenn das Gehäuse der wenigstens einen Filtereinrichtung im Wesentlichen in Form eines geraden Kreiszylinders ausgebildet ist. Prinzipiell sind jedoch auch andere Formen, wie etwa eine Quaderform, denkbar.

In einer vorteilhaften Weiterbildung der Erfindung wird vorgeschlagen, dass das Gehäuse der wenigstens einen Filtereinrichtung eine um eine im Wesentlichen vertikale Achse umlaufende äußere Umfangswand und eine um eine im Wesentlichen vertikale Achse umlaufende innere Umfangswand umfasst, die zwischen sich einen Aufnahmeraum für das Filtermedium bilden und beide von Abwasser durchströmbar ausgebildet sind, und dass das Gehäuse ferner eine obere Begrenzungswand aufweist, die das Gehäuse nach oben, vorzugsweise vollständig, flüssigkeitsdicht abschließt, während eine ebenfalls abwasserdicht ausgebildete untere Begrenzungswand lediglich den Aufnahmeraum nach unten flüssigkeitsdicht abschließt. Das Filtermedium kann von oben in den Aufnahmeraum der Filtereinrichtung eingeführt werden, wobei die durchströmbar ausgebildete innere und äußere Umfangswand des Filtergehäuses das Filtermedium umgibt. Um dabei verhindern zu können, dass ungefiltertes Abwasser in den filtermediumfreien innenbereich der Filtereinrichtung strömen kann, umfasst diese die obere Begrenzungswand, welche das Gehäuse nach oben, vorzugsweise vollständig, flüssigkeitsdicht abschließt. Somit ist es möglich, die gesamte Filtereinrichtung im Dauerstau zu betreiben, insbesondere vollständig unterhalb der Wasserlinie des zu filternden Abwassers. Dabei kann nur von dem Filtermedium gefiltertes Abwasser in den filtermediumfreien Innenbereich der Filtereinrichtung gelangen. Von dort kann das gefilterte Abwasser dann durch eine oder mehrere in der unteren Begrenzungswand vorgesehene Öffnungen abströmen.

Alternativ zu dieser vorteilhaften Weiterbildung der Erfindung wird vorgeschlagen, dass das Gehäuse eine um eine im Wesentlichen vertikale Achse umlaufende äußere Umfangswand und eine um eine im Wesentlichen vertikale Achse umlaufende innere Umfangswand umfasst, die zwischen sich einen Aufnahmeraum für das Filtermedium bilden und beide von Abwasser durchströmbar ausgebildet sind, und dass das Gehäuse ferner eine obere Begrenzungswand und eine untere Begrenzungswand aufweist, die nur den Aufnahmeraum nach oben bzw. nach unten flüssigkeitsdicht abschließen, wohingegen sie in ihrem der vertikalen Achse benachbarten Zentralabschnitt jeweils wenigstens eine Durchlassöffnung aufweisen, wobei die wenigstens eine Durchlassöffnung der oberen Begrenzungswand mit einem von zwei Längsenden einer Überlaufleitung in Strömungsverbindung steht, dessen anderes Längsende in Höhenrichtung oberhalb des Abwasserablaufs der Abwasserbehandlungsvorrichtung angeordnet ist und als Notüberlauf dient. Durch das Vorsehen einer mit der oberen Begrenzungswand des Filtergehäuses in Strömungsverbindung stehenden Überlaufleitung, welche im einfachsten Fall ein Rohr sein kann, wird erreicht, dass das Abwasser die erfindungsgemäße Abwasserbehandlungsvorrichtung auch in einer Extremsituationen, etwa einem Starkregenereignis, wie es beispielsweise höchstens alle fünf bis zehn Jahre einmal vorkommt, verlassen kann, so dass es zu keinem unzulässig großen Rückstau in Abschnitte eines Kanalsystems kommt, welche der Abwasserbehandlungsvorrichtung strömungstechnisch vorgelagert sind. Jedoch ist hierzu in Kauf zu nehmen, dass das die Abwasserbehandlungsvorrichtung über die Überlaufleitung verlassende Abwasser nicht von der Filtereinrichtung gereinigt wird.

Umfasst die obere Begrenzungswand eine Einhakvorrichtung, wie etwa einen Ring, zum Hochziehen bzw. Herablassen wenigstens eines Abschnitts der Filtereinrichtung innerhalb der Abwasserbehandlungsvorrichtung, so kann auf besonders einfach Weise die Filtereinrichtung oder zumindest ein Abschnitt davon mittels eines an üblichen Saug-Spül-Fahrzeugen in der Regel vorhandenen Hebezeugs, etwa ein Seilzug, aus dem Schacht herausgehoben bzw. in diesen hinabgelassen werden.

Zwar ist es möglich, beim Wechsel des Filtermediums die gesamte Filtereinrichtung, d.h. Filtermedium und Filtergehäuse auszutauschen, jedoch ist es in der Regel ausreichend, nur das Filtermedium auszutauschen und das Filtergehäuse weiter zu verwenden. Um dies auf einfache Weise zu ermöglichen, wird vorgeschlagen, die obere Begrenzungswand als einen von dem restlichen Gehäuse abnehmbaren Deckel auszubilden.

In Weiterbildung der Erfindung wird ferner vorgeschlagen, dass die äußere Umfangswand und die innere Umfangswand des Gehäuses jeweils eine Mehrzahl von von dem Abwasser durchströmbaren Durchbrechungen aufweisen, wobei zwischen dem Filtermedium auf der einen Seite und der äußeren Umfangswand oder/und der inneren Umfangswand auf der anderen Seite jeweils eine Dränschicht angeordnet ist, und wobei vorzugsweise zwischen der äußeren Umfangswand bzw. der inneren Umfangswand und der dieser Wand jeweils zugeordneten Dränschicht eine Maschenschicht angeordnet ist, welche eine Maschenweite aufweist, die kleiner als die kleinste Korngröße des verwendeten Filtermediums ist.

Die Maschenschicht, die auch unter der Bezeichnung "Gazeschicht" bekannt ist, kann das Filtermedium quasi als "Packung" im Inneren des Filtergehäuses sicher umschließen, wobei die Maschenweite der Maschenschicht auf die Korngröße des verwendeten Filtermediums abzustimmen ist. Auf diese Weise ist es möglich, das Filtermedium als Ganzes aus dem Filtergehäuse herauszuholen oder einzubringen. Die Dränschicht kann dabei wie ein Abstandshalter jeweils zwischen der Maschenschicht auf der einen Seite und der äußeren Umfangswand bzw. der inneren Umfangswand des Filtergehäuses auf der anderen Seite angeordnet sein kann. Die Dränschicht dient dazu, das in den Aufnahmeraum für das Filtermedium einströmende Abwasser möglichst gleichmäßig über die gesamte Außenmantelsfläche des Filtermediums zu verteilen bzw. das aus dem Aufnahmeraum für das Filtermedium über die gesamte Innenmantelfläche des Filtermediums ausströmende Abwasser zu sammeln und den Durchbrechungen zuzuführen. Somit kann die Leistungsfähigkeit des Filtermediums bestmöglich genutzt werden. Bei der Dränschicht kann es sich beispielsweise um ein dreidimensionales, mattenartiges Kunststofferzeugnis handeln.

Um das Positionieren der wenigstens einen Filtereinrichtung auf der Zwischenwandung bzw. dem Sockel zu erleichtern, wird vorgeschlagen, die Zwischenwandung oder/und den Sockel mit einer Positionierhilfe zu versehen. Als Positionierhilfe können etwa vertikal nach oben ausgerichtete Stäbe dienen, welche im montierten Zustand die äußere Umfangswand des Filtergehäuses umgeben. Besonders vorteilhaft ist es, wenn die oberen Längsenden dieser Stäbe trichterartig ausgebildet sind, so dass die Filtereinrichtung leicht zwischen die Stäbe eingeführt werden kann.

Gleichwohl ist hier anzumerken, dass die erfindungsgemäße Abwasserbehandlungsvorrichtung gegebenenfalls auch ganz ohne Notüberlauf auskommen kann. Bei entsprechender Auslegung des die Filtereinrichtung aufnehmenden Schachts kann das Volumen dieses Schachts als Puffervolumen dienen, welches selbst in Extremsituationen das anfallende Regenwasser so aufnehmen kann, dass es zu keinem unzulässig großen Rückstau in das strömungstechnisch vor der Abwasserbehandlungsvorrichtung gelegene Kanalsystem kommt. Nach dem Starkregenereignis kann der Wasserspiegel dann im Schacht wieder auf sein normales Niveau absinken, wobei Abwasser die im Dauerstau betriebene Filtereinrichtung kontinuierlich durchströmt. Zusätzlich oder alternativ kann eine mit dem Schacht in Flüssigkeitsaustauschverbindung stehende, abgedichtete Rigole vorgesehen sein. Wenn die Abwasserbehandlungsvorrichtung keinen Notüberlauf umfasst, kann sichergestellt werden, dass zwangsweise stets das gesamte Abwasser der Filtereinrichtung zugeführt wird, so dass kein Abwasser versickern kann, ohne zuvor von ihr gereinigt worden zu sein. Es sei angemerkt, dass die erfindungsgemäße Abwasserbehandlungsvorrichtung auch zusammen mit der Abwasserbehandlungsanordnung betrieben werden kann, die in der DE 10 2008 007 227 A1 der Anmelderin offenbart ist, und welche gerade dazu ausgelegt ist, keinen Notüberlauf vorsehen zu müssen.

Um die Gesamtfilterleistung der Abwasserbehandlungsvorrichtung flexibel an die jeweils örtlichen Gegebenheiten anpassen zu können, kann es vorteilhaft sein, wenn die Abwasserbehandlungsvorrichtung eine Mehrzahl von nebeneinander angeordneten Filtereinrichtungen umfasst. Beispielsweise können zwei Filtereinrichtungen in der Abwasserbehandlungsvorrichtung vorgesehen sein, um etwa doppelt soviel Abwasser pro Zeiteinheit reinigen zu können, wie mit nur einer solchen Filtereinrichtung. Jedoch erfordert diese Lösung einen Schacht mit einem entsprechend großen Durchmesser zum Aufnehmen der Filtereinrichtungen.

Um verhindern zu können, dass, insbesondere sedimentierbare, Partikel, welche zuvor nicht aus dem von der Abwasserbehandlungsvorrichtung zu reinigendem Abwasser entfernt werden konnten, direkt von dem Abwasserzulauf auf die Filtereinrichtung stoßen und damit eine einseitige Belastung der Filtereinrichtung verursachen, wird vorgeschlagen, dass die Abwasserbehandlungsvorrichtung ferner eine Prallplatte umfasst, welche zwischen dem Abwasserzulauf und der Filtereinrichtung angeordnet ist. Hierdurch wird die Strömung des Abwasser zwangsweise umgelenkt, so dass die Partikel mehr Zeit haben, sich an dem Boden des Schachts abzusetzen. Besonders bevorzugt ist es dabei, wenn die Prallplatte die Filtereinrichtung abschnittsweise, beispielsweise bogenförmig, derart umgibt, dass von der Filtereinrichtung aus der Abwasserzulauf nicht zu sehen ist.

Ein weiteres Problem bei den aus dem Stand der Technik bekannten Abwasserbehandlungsvorrichtungen besteht darin, dass sie nur eine sehr begrenzte Flexibilität aufweisen, was die Größe der anzuschließenden Wassereinzugsfläche betrifft. Je größer die anzuschließende Wassereinzugsfläche ist, desto größer muss auch die Filtereinrichtung, welche in einer Abwasserbehandlungsvorrichtung üblicherweise den hydraulischen Engpass bildet, ausgelegt werden, um den nötigen Durchsatz an zu behandelndem Abwasser garantieren zu können. Wenn eine größere Wassereinzugsfläche an eine bestehende Abwasserbehandlungsvorrichtung angeschlossen werden soll, gestaltet sich aber die Vergrößerung der Filtereinrichtung bis heute schwierig. Dies liegt insbesondere daran, dass für größere Filtereinrichtungen häufig auch größere Schächte benötigt werden, die nicht den üblicherweise verwendeten Schächten entsprechen. Hinzu kommt, dass die Filtereinrichtung zum Auswechseln des Filtermediums und für andere Wartungsarbeiten regelmäßig aus dem Schacht herausgeholt und in diesen wieder eingeführt werden muss. Bei entsprechend großen Filtereinrichtungen reicht die lichte Weite von zu üblichen Schachtabdeckungen gehörigen Schachtöffnungen aber nicht mehr aus. Hier werden teure Spezialanfertigungen nötig, was insbesondere dann zutrifft, wenn die Schachtabdeckung befahrbar sein soll, da die Schachtabdeckung in diesem Fall sehr massiv auszuführen ist.

Eine Lösung dieses Problems findet der Fachmann in der DE 20 2007 003 813 U1, welche eine vertikal von oben nach unten durchströmbare, kreisscheibenförmige Filtereinrichtung offenbart, die in Segmenten, ähnlich wie Tortenstücke, ausgeführt ist. Da die einzelnen Segmente der Filtereinrichtung einen kleineren Durchmesser als die gesamte Filtereinrichtung aufweisen, kann der Durchmesser der gesamten Filtereinrichtung größer als die lichte Weite einer üblichen Schachtöffnung sein. Jedoch ist neben der Tatsache, dass für diese Lösung wegen der vertikalen Durchströmung des Filters Arretierungsmittel notwendig sind, an dieser Lösung ferner nachteilig, dass die maximal erreichbare Größe der Filtereinrichtung gleichwohl durch den Durchmesser des Schachts begrenzt ist. Bei größeren Wassereinzugsflächen werden somit Schächte benötigt, die einen entsprechend großen, und somit nicht unbedingt üblichen, Durchmesser aufweisen.

Es ist somit eine weitere Aufgabe der vorliegenden Erfindung, eine Abwasserbehandlungsvorrichtung bereitzustellen, welche sich relativ leicht, d.h. kostengünstig, an eine sich ändernde Größe der Wassereinzugsfläche anpassen lässt.

Diese Aufgabe wird als selbständiger erfinderischer Aspekt oder auch in Weiterbildung der oben beschriebenen Erfindung durch eine Abwasserbehandlungsvorrichtung der eingangs genannten Art gelöst, bei welcher wenigstens eine Filtereinrichtung wenigstens zwei Filtereinheiten umfasst, wobei jede Filtereinheit eine Gehäuseeinheit aufweist, in der das Filtermedium zum Ad- oder/und Absorbieren von Fremdstoffen aus dem Abwasser aufgenommen ist, und wobei im Betriebszustand der Abwasserbehandlungsvorrichtung die wenigstens zwei Filtereinheiten in vertikaler Richtung übereinander gestapelt sind.

Es ist das Verdienst der Erfinder, erkannt zu haben, dass sich insbesondere die Raumdimension in vertikaler Richtung dazu eignet, die Größe der wenigstens einen Filtereinrichtung zu variieren. Die zur Ausbildung von Schächten verwendeten Rohre haben zwar in der Regel genormte Durchmesser, doch kann ihre Länge in einfacher Weise variiert werden, etwa indem mehrere Rohre aneinander gefügt werden. Auf die Verwendung von Rohren mit unüblich großen Durchmessern kann somit verzichtet werden. Auch können übliche Schachtabdeckungen verwendet werden. Durch den modularen Aufbau der Filtereinrichtung, kann die Abwasserbehandlungsvorrichtung dabei flexibel, zumindest stufenweise, an die Größe der anzuschließenden Wassereinzugsfläche angepasst werden. Hierzu ist allenfalls die Länge in vertikaler Richtung des die Filtereinrichtung aufnehmenden Schachts zu variieren. Wenn mit einer Änderung der Wassereinzugsfläche schon beim Anlegen der Abwasserbehandlungsvorrichtung gerechnet werden muss, so kann vorzugsweise von vorne herein ein entsprechend tiefer Schacht vorgesehen werden. Dadurch, dass die einzelnen Filtereinheiten relativ klein und somit leicht ausgebildet sein können, lassen sie sich gut handhaben. Insbesondere können sie mit den Mitteln, wie sie für gewöhnlich an den bekannten Saug-Spül-Fahrzeugen vorgesehen sind, in den Schacht hinabgesenkt oder aus diesem herausgezogen werden, ohne dass hierfür ein Einsteigen in den Schacht nötig wäre. Vorzugsweise sollten die Filtereinheiten vertikal direkt unter der Schachtabdeckung übereinander gestapelt werden.

Um die Fertigungskosten für die Filtereinheiten durch die Verwendung von Gleichteilen möglichst gering zu halten, wird vorgeschlagen, die wenigstens zwei Filtereinheiten im Wesentlichen identisch auszubilden. Lediglich bei der obersten Filtereinheit der montierten Filtereinrichtung mag es unter Umständen vorteilhaft sein, diese geringfügig unterschiedlich zu der anderen Filtereinheit bzw. den anderen Filtereinheiten der Filtereinrichtung auszuführen, wie aus den Ausführungsbeispielen noch ersichtlich werden wird.

Um eine möglichst gute gegenseitige Kompensation der Reaktionskräfte, welche, wie oben bereits beschrieben, durch den hydraulischen Widerstand des von dem Abwasser durchströmten Filters auf die Filtereinrichtung wirken, erzielen zu können, wird vorgeschlagen, dass die Gehäuseeinheiten im Wesentlichen zylinderförmig ausgebildet sind, wobei sich die Zylinderachse im Wesentlichen vertikal erstreckt. Da die üblichen Schachtabdeckungen zudem häufig eine kreisrunde Form aufweisen, kann durch zylinderförmig gebildete Gehäuseeinheiten die lichte Weite solcher Schachtöffnungen besonders gut ausgenutzt werden.

Um bei der montierten Filtereinrichtung zwei in vertikaler Richtung unmittelbar aufeinander folgende Filtereinheiten sicher und einfach relativ zueinander ausrichten, insbesondere zentrieren, zu können, wird ferner vorgeschlagen, dass zwischen zwei in Höhenrichtung unmittelbar aufeinander folgenden Filtereinheiten ein Zwischeneinsatz oder/und Zwischendeckel vorgesehen ist. Der Zwischeneinsatz oder/und Zwischendeckel kann dabei an einer der beiden benachbarten Filtereinheiten fest angebracht sein und in eine Ausnehmung an der anderen der beiden benachbarten Filtereinheiten eingreifen. Somit kann verhindert werden, dass der aus Filtereinheiten bestehende Stapel verrutschen oder/und umkippen kann. Zudem dient er als Einführhilfe beim Stapeln bzw. beim Ablassen in den Schacht mit Seil und Haken.

Nachzutragen ist noch, dass an dem Zwischeneinsatz oder/und Zwischendeckel ferner eine Angriffsstelle für ein Hubgerät vorgesehen sein kann, beispielsweise eine mit einem Bügel ausgebildete Querstange, an der die Seilwinde eines üblichen Saug-Spül-Fahrzeugs angreifen kann. Nachzutragen ist ferner, dass auch bei Nebeneinanderanordnung einer Mehrzahl von Filtereinrichtungen eine, mehrere oder alle dieser Filtereinrichtung(en) modular aus einer Mehrzahl von übereinander angeordneten Filtereinheiten ausgebildet sein kann bzw. können.

Wie eingangs erwähnt, können unter Umständen Risse im Filtermedium entstehen, wenn das Filtermedium trocken fällt, d.h. austrocknet. Dies kann sich wiederum bei dem nächsten Starkregenereignis, zumindest anfänglich, negativ auf die Ad- bzw. Absorptionsfähigkeit des Filtermediums auswirken. Gleichwohl kann es aus dem im Folgenden noch erläuterten Grund jedoch bisweilen vorteilhaft sein, das Filtermedium, zumindest gelegentlich, trocken fallen zu lassen. In der Praxis ist nämlich je nach örtlicher Gegebenheit damit zu rechnen, dass neben Schadstoffen, die vom Kraftfahrzeugverkehr stammen und gezielt in der Abwasserbehandlungsvorrichtung zurückgehalten werden sollen, auch organische Materialien, wie zum Beispiel Blütenpollen, Pflanzenreste oder Hundekot, in die Abwasserbehandlungsvorrichtung eingetragen werden. Befindet sich die Filtereinrichtung ständig im Dauerstau, kann dies bei einer längeren Trockenwetterphase dazu führen, dass biologische Prozesse einsetzen, die bevorzugt an den großen Oberflächen des Filtermediums einen so genannten Biofilm bilden und somit die Poren der Filtereinrichtung zusetzen. Dies kann den Filter verstopfen und die Betriebssicherheit der Anlage gefährden. Die planmäßige Standzeit der Filtereinrichtung wäre verkürzt und häufigere Wartungszyklen wären die Folge. Solche Probleme können jedoch vermieden oder zumindest reduziert werden, wenn der Filter, zumindest gelegentlich, trocken fällt.

Natürlich ist es möglich, mittels komplizierter Mechanismen oder Pumpen die Abwasserbehandlungsvorrichtung von Abwasser zu befreien uns somit ein Trockenfallen der wenigstens einen Filtereinrichtung zu erzwingen. Deutlich einfacher und daher bevorzugt ist es jedoch, wenn die Abwasserbehandlungsvorrichtung ferner an einer strömungstechnisch zwischen der wenigstens einen Filtereinrichtung und dem Abwasserablauf gelegenen Stelle einen wenigstens eine Öffnung aufweisenden Versickerungsablauf umfasst, welcher derart konfiguriert ist, dass die wenigstens eine Filtereinrichtung in einem Zeitraum von 1 bis 24 Stunden, vorzugsweise von 5 bis 10 Stunden, trocken fällt, sofern der Abwasserbehandlungsvorrichtung in diesem Zeitraum kein weiteres Abwasser, insbesondere Regenwasser, zugeführt wird. Bei einem derart langsamen Trockenfallen kann die Rissbildung im Filtermedium zumindest weitgehend, wenn nicht gar vollständig vermieden werden.

Das durch den Versickerungsablauf aus der Abwasserbehandlungsvorrichtung austretende Abwasser ist von der wenigstens einen Filtereinrichtung gefiltert worden und kann somit direkt in das die Abwasserbehandlungsvorrichtung umgebende Erdreich versickert werden. Es ist jedoch auch denkbar, das Abwasser zunächst einer Rigole, wie sie nachfolgend noch näher beschrieben wird, zuzuleiten, von wo aus es dann über eine längere Zeit hinweg in das Erdreich versickern kann.

Der Versickerungsablauf kann beispielsweise durch eine oder aber auch durch mehrere Öffnungen in einem die Filtereinrichtung aufnehmenden Schacht gebildet sein. Vorzugsweise ist die wenigstens eine Öffnung am Schachtboden angeordnet. Auf jeden Fall sollte sie in Höhenrichtung unterhalb der wenigstens einen Filtereinrichtung angeordnet sein, um sicherstellen zu können, dass die wenigstens eine Filtereinrichtung vollständig trocken fallen kann. Sofern sie in Höhenrichtung direkt unter der wenigstens einen Filtereinrichtung angeordnet ist, kann eine einfache Zugänglichkeit von oben erreicht werden, insbesondere dann, wenn die wenigstens eine Filtereinrichtung, beispielsweise für einen Filterwechsel, aus der Abwasserbehandlungsvorrichtung entnommen ist. Auf diese Weise kann der Versickerungsablauf mittels zum Beispiel eines Hochdruckreinigers einfach gesäubert werden. Um die Gefahr einer Verstopfung der wenigstens einen Öffnung des Versickerungsablaufs zu reduzieren, kann ferner daran gedacht werden, dass die wenigstens eine Öffnung einen gegenüber dem restlichen Schachtboden erhöhten Einlass aufweist.

Verglichen mit dem Abwasserablauf der Abwasserbehandlungsvorrichtung ist die wenigstens eine Öffnung des Versickerungsablaufs sehr klein, so dass durch den Versickerungsablauf im Normalbetriebszustand der Abwasserbehandlungsvorrichtung deutlich geringere Volumenströme hindurchtreten als durch den Abwasserablauf. Somit kann im Normalbetriebszustand sichergestellt werden, dass die wenigstens eine Filtereinrichtung stets im Dauerstau betrieben wird und somit im Wesentlichen keine ungleichmäßige Beanspruchung der wenigstens einen Filtereinrichtung über die Höhe hinweg auftritt. Größe, Anzahl, Platzierung und Geometrie der wenigstens eine Öffnung des Versickerungsablaufs sind dabei so zu wählen, dass die wenigstens eine Filtereinrichtung in einem Zeitraum von 1 bis 24 Stunden, vorzugsweise von 5 bis 10 Stunden, trocken fällt, sofern der Abwasserbehandlungsvorrichtung in diesem Zeitraum kein weiteres Abwasser, insbesondere Regenwasser, zugeführt wird. Insbesondere kann daran gedacht werden, die wenigstens eine Öffnung in Form von Düsen auszubilden, wie sie zum Beispiel von der Firma "Rainbird" kommerziell angeboten werden.

Wenn die wenigstens eine Filtereinrichtung aus dem Normalbetriebszustand in einen Bereitschaftszustand übergeht und dabei trocken fällt, strömt unweigerlich mehr zu reinigendes Abwasser durch in Höhenrichtung tiefer gelegene Bereiche der wenigstens einen Filtereinrichtung, als durch die höher gelegenen Bereiche, so dass die tiefer gelegenen Bereiche stärker beansprucht werden. Um diesen unerwünschten Effekt zu minimieren, wird in einer vorteilhaften Weiterbildung vorgeschlagen, dass die Abwasserbehandlungsvorrichtung ferner eine strömungstechnisch zwischen dem Abwasserzulauf und der wenigstens einen Filtereinrichtung angeordnete Überlaufschwelle umfasst, über welche das durch den Abwasserzulauf in die Abwasserbehandlungsvorrichtung einströmende und zu behandelnde Abwasser treten muss, um die wenigstens eine Filtereinrichtung zu erreichen, wobei die Überlaufschwelle in Höhenrichtung über dem oberen Rand des Gehäuses der wenigstens einen Filtereinrichtung angeordnet ist, allenfalls jedoch auf gleicher Höhe.

Durch das Vorsehen einer solchen Überlaufschwelle kann das Volumen, welches beim Trockenfallen der wenigstens einen Filtereinrichtung diese durchströmt, minimiert werden. Die Überlaufschwelle ist hierzu vorzugsweise in Höhenrichtung unter der unteren Kante des Abwasserablaufs angeordnet, allenfalls jedoch auf gleicher Höhe. Insbesondere kann daran gedacht werden, die wenigstens eine Filtereinrichtung ringsum von einer nach oben hin offenen Überlaufwand zu umgeben, deren oberer Rand dann die Überlaufschwelle bildet. Das Volumen, welches von dieser Überlaufwand umschlossen wird, sollte vorzugsweise maximal doppelt so groß wie das Volumen der wenigstens einen von der Überlaufwand umgebenen Filtereinrichtung sein. Ist die wenigstens eine Filtereinrichtung im Wesentlichen zylinderförmig ausgebildet, kann vorzugsweise auch die Überlaufwand zylinderförmig, zum Beispiel als gerader hohler Kreiszylinder, ausgebildet sein und die wenigstens eine Filtereinrichtung, beispielsweise konzentrisch, umgeben. Falls die wenigstens eine Filtereinrichtung wenigstens zwei in vertikaler Richtung übereinander gestapelte Filtereinheiten umfasst, kann ferner daran gedacht werden, auch die Überlaufwand aus einer entsprechenden Anzahl vertikal übereinander gestapelter Überlaufwandeinheiten zu bilden, um ihre Handhabung dadurch genauso einfach und flexibel zu gestalten. Es sei ferner noch angemerkt, dass durch das Vorsehen der Überlaufwand, deren oberer Rand die Überlaufschwelle bildet, auch die Vorteile der weiter oben erwähnten Prallplatte erzielt werden können. Insbesondere kann die Menge an sedimentierbaren Partikeln, die durch den Abwasserzulauf in die Abwasserbehandlungsvorrichtung gelangen und dann mit dem zu behandelnden Abwasser zu der wenigstens einen Filtereinrichtung strömen, verringert werden.

Wie dies prinzipiell vom Sedi®-substrator her aus dem Stand der Technik bekannt ist, kann die erfindungsgemäße Abwasserbehandlungsvorrichtung auch Teil einer Abwasserbehandlungsanlage sein, welche neben der Abwasserbehandlungsvorrichtung ferner eine Vorreinigungsvorrichtung, etwa ein Sedimentationsrohr, umfasst, wobei die Vorreinigungsvorrichtung der Abwasserbehandlungsvorrichtung strömungstechnisch vorgelagert ist und mit dem Abwasserzulauf der Abwasserbehandlungsvorrichtung in Strömungsverbindung steht. Durch das Vorsehen einer derartigen Vorreinigungsvorrichtung, ist es möglich, die Einsatzdauer des in der Filtereinrichtung aufgenommen Filtermediums erheblich zu verlängern. Beispielsweise kann die Vorreinigungsvorrichtung ein Sedimentationsrohr umfassen, wie es etwa aus der DE 10 2004 008 960 A1 bekannt ist. Dabei erfolgt die Reinigung des zu behandelnden Abwassers, insbesondere Regenwassers, in mehreren Stufen, wobei sedimentationsfähige Fremdstoffe bereits in dem Sedimentationsrohr aus dem Abwasser zurückgehalten werden und nicht sedimentationsfähige oder gelöste Fremdstoffe in dem Filtermedium der Filtereinrichtung abgefiltert bzw. ad- oder absorbiert werden. Selbstverständlich ist die Vorreinigungsvorrichtung nicht auf den Einsatz eines Sedimentationsrohrs beschränkt, sondern kann zusätzlich oder alternative auch andere Vorrichtungen umfassen, etwa eine Leichtstoffabscheidevorrichtung, wie sie in der EP 2 226 106 A1 der Anmelderin beschrieben ist.

Die Abwasserbehandlungsanlage kann, wie dies ebenfalls prinzipiell von dem Sedi®-substrator aus dem Stand der Technik bekannt ist, ferner eine zur Versickerung des gefilterten Abwassers dienende Rigole umfassen, wobei die Rigole der Abwasserbehandlungsvorrichtung strömungstechnisch nachgelagert ist und mit dem Abwasserablauf der Abwasserbehandlungsanordnung in Strömungsverbindung steht. Das in der Vorreinigungsvorrichtung und in der Filtereinrichtung gereinigte Abwasser, etwa Regenwasser, kann somit vermittels einer solchen Rigoleneinheit im Erdboden versickert werden. Umweltbelastende Schadstoffe sind dabei weitgehend aus dem Abwasser herausgefiltert worden. Zudem kann der Reinigungsaufwand für die Rigole auf ein Minimum reduziert werden, da eine Verschlammung des Rigolenbodens über die Zeit hinweg durch die vorherige Vorreinigung und Filterung des Abwassers kaum noch auftreten wird. Die Rigole als solches dient dabei dazu, weitgehend unabhängig von dem gerade vorherrschendem Regenereignis, über die Zeit hinweg eine mehr oder weniger konstante Menge an zu versickerndem Abwasser an das Erdreich abzugeben. Die Rigole kann etwa aus einer oder mehreren der aus der EP 1 260 640 A1 der Anmelderin bekannten Rigoleneinheiten aufgebaut sein.

Grundsätzlich ist es jedoch auch denkbar, das in der Vorreinigungsvorrichtung und in der Filtereinrichtung gereinigte Abwasser durch den Abwasserablauf einem Oberflächengewässer zuzuführen.

Die Erfindung wird im folgenden an Ausführungsbeispielen anhand der beigefügten Zeichnungen näher erläutert werden. Es stellt dar:
- Figur 1: eine schematische Darstellung einer ersten Ausführungsform einer erfindungsgemäßen Abwasserbehandlungsvorrichtung,
- Figur 2A: eine schematische Schnittansicht entlang der Schnittlinie IIA - IIA der in Figur 1 dargestellten Abwasserbehandlungsvorrichtung,
- Figur 2B: eine schematische Schnittansicht, ähnlich wie die der in Figur 2A dargestellten, jedoch betreffend eine zweite Ausführungsform der erfindungsgemäßen Abwasserbehandlungsvorrichtung,
- Figur 3: eine schematische Darstellung einer Abwasserbehandlungsanlage, welche die in Figur 1 gezeigte Abwasserbehandlungsvorrichtung umfasst,
- Figur 4A: eine detaillierte Darstellung des Gehäuses der Filtereinrichtung der erfindungsgemäßen Abwasserbehandlungsvorrichtung,
- Figur 4B: eine detaillierte Darstellung eines Deckels des in Figur 4A dargestellten Gehäuses,
- Figur 5: eine detaillierte Schnittsansicht des in Figur 4A dargestellten Gehäuses, welches ein Filtermedium umgibt,
- Figur 6A: eine Teilschnittdarstellung einer dritten Ausführungsform der erfindungsgemäßen Abwasserbehandlungsvorrichtung, umfassend zwei Filtereinheiten,
- Figur 6B: eine Darstellung der Montageschritte der in Figur 6A dargestellten Filtereinheiten,
- Figur 6C: eine schematische Schnittansicht der in Figur 6A dargestellten Abwasserbehandlungsvorrichtung,
- Figur 7A: eine Teilschnittdarstellung einer vierten Ausführungsform der erfindungsgemäßen Abwasserbehandlungsvorrichtung, umfassend vier Filtereinheiten,
- Figur 7B: eine schematische Darstellung der Montageschritte der in Figur 7A dargestellten Filtereinheiten,
- Figur 8A: eine schematische Darstellung einer fünften Ausführungsform der erfindungsgemäßen Abwasserbehandlungsvorrichtung, umfassend einen Versickerungsablauf, und
- Figur 8B: eine schematische Schnittansicht der in Figur 8A dargestellten fünften Ausführungsform.

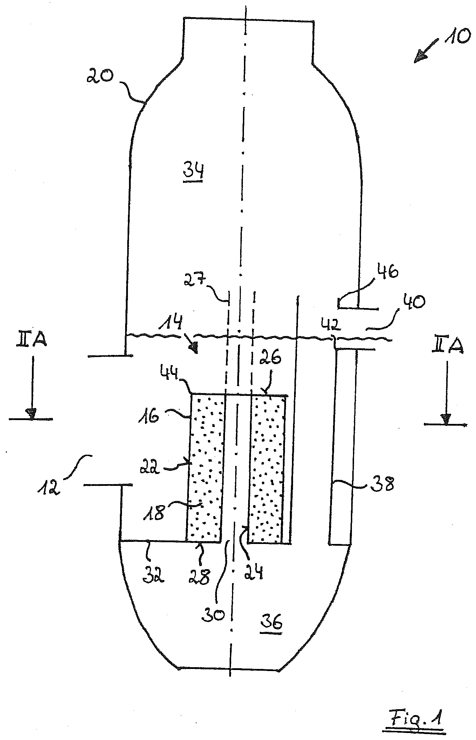

In Figur 1 ist eine erfindungsgemäße Abwasserbehandlungsvorrichtung ganz allgemein mit 10 bezeichnet. Die Abwasserbehandlungsvorrichtung 10 umfasst einen Abwasserzulauf 12, durch welchen von der erfindungsgemäßen Abwasserbehandlungsvorrichtung 10 zu reinigendes Abwasser, beispielsweise Regenwasser, in die Abwasserbehandlungsvorrichtung 10, d.h. in einen Schacht 20, eingeleitet wird.

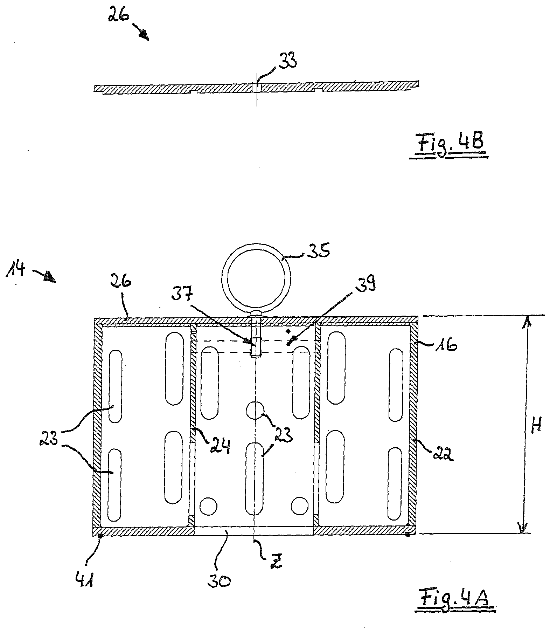

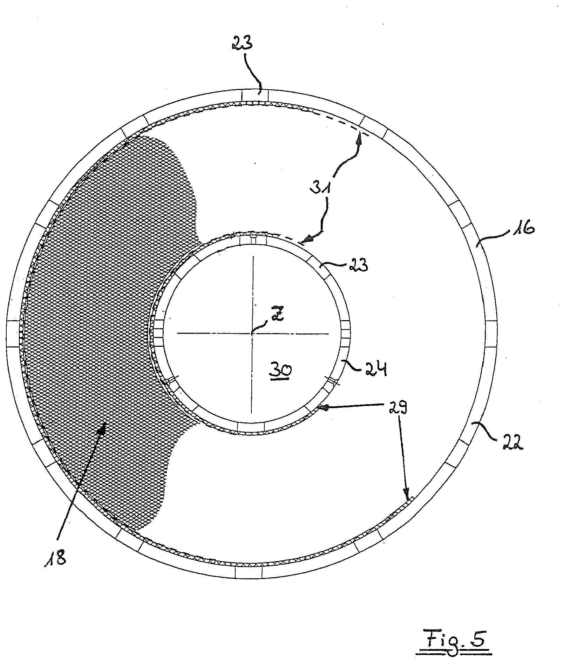

Ferner umfasst die Abwasserbehandlungsvorrichtung 10 eine Filtereinrichtung 14 zum Ad- oder/und Absorbieren von Fremdstoffen aus dem Abwasser. Während Figur 1 eine grob schematische Darstellung der gesamten Abwasserbehandlungsvorrichtung 10 zeigt, ist in den Figuren 4A, 4B und 5 speziell der Aufbau der Filtereinrichtung 14 detailliert zu erkennen. Nachfolgend soll daher zunächst die Filtereinrichtung 14 unter Zuhilfenahme der Figuren 4A, 4B und 5 beschrieben werden.

Die Filtereinrichtung 14 umfasst ein Gehäuse 16, welches dazu ausgebildet ist, ein in Figur 1 gepunktet und in Figur 5 kariert angedeutetes Filtermedium 18 aufzunehmen. Das Filtergehäuse 16 weist dabei im Wesentlichen die Form eines geraden Hohlkreiszylinders auf, wobei die Zylinderachse Z vertikal ausgerichtet ist und im vorliegenden Ausführungsbeispiel mit der Mittelachse des die Filtereinrichtung 14 aufnehmenden Schachts 20 fluchtet. Das Filtergehäuse 16 umfasst eine von dem Abwasser in horizontaler Richtung im Wesentlichen allseitig durchströmbar ausgebildete, radial äußere Umfangswand 22, sowie eine ebenfalls von dem Abwasser in horizontaler Richtung im Wesentlichen allseitig durchströmbar ausgebildete radial innere Umfangswandung 24. Hierzu umfassen die radial äußere Umfangswand 22 und die radial innere Umfangswand 24 jeweils eine Mehrzahl von im Wesentlichen gleichförmig verteilten Durchbrechungen 23, durch welche das Abwasser durch die Wandungen hindurch strömen kann. Die radial äußere Umfangswand 22 bildet dabei zusammen mit der radial inneren Umfangswand 24 einen Aufnahmeraum für das Filtermedium 18, welches etwa ein Filtersubstrat sein kann. Es sei hier angemerkt, dass in Figur 4A nur das leere Filtergehäuse 16, d.h. das Filtergehäuse 16 ohne Filtermedium 18, dargestellt ist, wohingegen Figur 5 einen Schnitt senkrecht zur Zylinderachse Z des Filtergehäuses 16 mit dem Filtermedium 18 zeigt.

Wie in Figur 5 lediglich angedeutet ist, kann das Filtermedium 18 quasi als "Packung" im Inneren des hohlzylinderförmigen Filtergehäuses 16 von einer Maschenschicht 31, die auch als "Gazeschicht" bekannt ist, sicher umschlossen sein, wobei die Maschenweite der Maschenschicht 31 auf die Korngröße des verwendeten Filtermediums 18 abzustimmen ist. So kann beispielsweise die Maschenweite der Maschenschicht 0,5 mm betragen, wenn das Filtersubstrat eine Korngröße von 1-2 mm aufweist.

Ebenfalls in Figur 5 nur angedeutet ist eine Dränschicht 29, welche wie ein Abstandshalter jeweils zwischen der Maschenschicht 31 auf der einen Seite und der äußeren Umfangswand 24 bzw. der inneren Umfangswand 22 auf der anderen Seite angeordnet sein kann. Die Dränschicht 29 dient dazu, das in den Aufnahmeraum für das Filtermedium 18 einströmende Abwassers möglichst gleichmäßig über die gesamte Außenmantelfläche des Filtermediums 18 zu verteilen bzw. das aus dem Aufnahmeraum für das Filtermedium 18 über die gesamte Innenmantelfläche des Filtermediums 18 ausströmende Abwasser zu sammeln und den Durchbrechungen 23 zuzuführen. Somit kann die Leistungsfähigkeit des Filtermediums 18 bestmöglich genutzt werden. Bei der Dränschicht 29 handelt es sich beispielsweise um ein dreidimensionales, mattenartiges Kunststofferzeugnis.

Nach unten hin ist das Gehäuse 16 durch eine untere Begrenzungswand begrenzt, welche lediglich den Aufnahmeraum für das Filtermedium 18 nach unten flüssigkeitsdicht abschließt, jedoch in der Mitte eine Öffnung 30 aufweist, durch welche das von dem Filtermedium 18 gereinigte Abwasser abströmen kann.

Nach oben hin ist das Gehäuse 16 durch eine obere Begrenzungswand 26 in Form eines vom restlichen Gehäuse 16 abnehmbaren Deckels vollflächig flüssigkeitsdicht abgeschlossen. Die obere Begrenzungswand 26 ist in Figur 4B nochmal separat dargestellt. Sie umfasst in dem vorliegenden Ausführungsbeispiel in der Mitte eine Durchgangsbohrung 33, durch welche ein Stift mit einem am oberen Längsende vorgesehenen Ring 35 durchgeführt werden kann, wodurch die Durchgangsbohrung 26 flüssigkeitsdicht geschlossen wird. Der den Ring 35 aufweisende Stift umfasst an seinem unteren Längsende ein Gewinde 37. Wie in Figur 4A gestrichelt angedeutet ist, kann mit dem restliche Filtergehäuse 16 ein eine Gewindebohrung aufweisender Flachstahl 39 fest verbunden sein. In diesem Fall kann das Gewinde 37 an dem den Ring 35 aufweisenden Stift mit der Gewindebohrung im Flachstahl 39 in Eingriff gebracht werden. Zum Wechseln des Filtermediums 18 lässt sich somit die gesamte Filtereinrichtung 14 mittels eines an Reinigungsfahrzeugen üblicherweise vorgesehenen Hebezeugs, welches auf einfach Weise mit dem Ring 35 in Eingriff bringbar ist, aus dem Schacht 20 ziehen, bzw. in diesen hinab senken. Dabei ist darauf zu achten, dass die Filtereinrichtung 14 für ein üblicherweise verwendetes Hebezeug nicht zu schwer ist. Lasten über 250 kg würden beispielsweise bereits den Einsatz eines Autokrans erforderlich machen. Ein wichtiger Parameter zum Beeinflussen des Gewichts der Filtereinrichtung 14 ist ihre Höhe H. Dabei ist jedoch anzumerken, dass die Höhe H auch wesentlich von der Größe der an die Abwasserbehandlungsvorrichtung 10 anzuschließenden Fläche abhängig ist. Im Hinblick auf die weiter unten beschriebenen anderen Ausführungsbeispiele werden jedoch Möglichkeiten angegeben, wie sich dieses Problem lösen lässt.

Besonders vorteilhaft bei der erfindungemäßen Abwasserbehandlungsvorrichtung 10 ist, dass, wie unten noch näher beschrieben wird, in Summe auf das Filtermedium 18 keine nennenswerten Kräfte, verursacht von dem einströmenden Abwasser und dem hydraulischen Widerstand des Filtermediums 18, wirken, so dass es nicht nötig ist, die Filtereinrichtung 14, welche eine gegenüber Wasser höhere spezifische Dichte aufweist, in der restlichen Abwasserbehandlungsvorrichtung 10 zu sichern. Vielmehr reicht schon die Schwerkraft aus, die Filtereinrichtung 14 sicher an ihrer Stelle im Schacht 20 zu halten. Somit kann die Filtereinrichtung 14, beispielsweise um das Filtermedium 18 auszuwechseln, leicht aus dem Schacht 20 entfernt oder in diesen eingebracht werden, ohne dass hierzu ein Einsteigen in den Schacht 20 erforderlich wäre. Beim Wechsel des Filtermediums 18 wird dabei in der Regel nur das Filtersubstrat ausgetauscht, wohingegen das Filtergehäuse 16 weiterverwendet werden kann. Selbstverständlich ist es aber auch möglich, bei Bedarf die gesamte Filtereinrichtung 14, d.h. Filtersubstrat und Filtergehäuse 16, auszutauschen.

Ferner zeigt Figur 1 auch noch eine Variante des oben beschriebenen Filtergehäuses 16, bei welcher eine gestrichelt dargestellte Überlaufleitung 27 in Form eines sich vertikal erstreckenden, geraden, kreiszylinderförmigen Rohrs mit einem unteren Längsende an der oberen Begrenzungswand 26 angebracht ist. Die beiden Längsenden der Überlaufleitung 27 sind offen ausgebildet, wobei die Öffnung an dem oberen Längsende in Höhenrichtung um einen vorbestimmten Abstand über einem im Folgenden noch näher beschriebenen Abwasserablauf 40 der Abwasserbehandlungsvorrichtung 10 angeordnet ist und als Notüberlauf dient. Bei dieser Variante schließt die obere Begrenzungswand 26 das Gehäuse 16 nicht vollflächig flüssigkeitsdicht nach oben ab, sondern weist in seinem Zentralabschnitt, welcher der Zylinderachse des Gehäuses 16 benachbart ist, eine kreisrunde Durchlassöffnung auf, die mit der unteren Öffnung der Überlaufleitung 27 fluchtet. Somit kann das Abwasser die Abwasserbehandlungsvorrichtung auch in einer Extremsituationen, etwa einem Starkregenereignis, wie es beispielsweise höchstens alle fünf bis zehn Jahre einmal vorkommt, über die Überlaufleitung 27 verlassen. Auf diese Weise wird verhindert, dass es zu einem unzulässig großen Rückstau in Abschnitte eines Kanalsystems kommt, welche strömungstechnisch vor dem Abwasserzulauf 12 liegen. Es sei angemerkt, dass nur bei einer oben beschriebenen Extremsituationen, d.h. wenn der Abwasserpegel auf ein Niveau im Kanal 20 steigt, welches wenigstens so hoch ist wie die als Notüberlauf dienende Öffnung am oberen Längsende der Überlaufleitung 27, Abwasser durch die Überlaufleitung 27 strömen kann. Ansonsten wird das Abwasser ganz normal von der Filtereinrichtung 14 gefiltert.

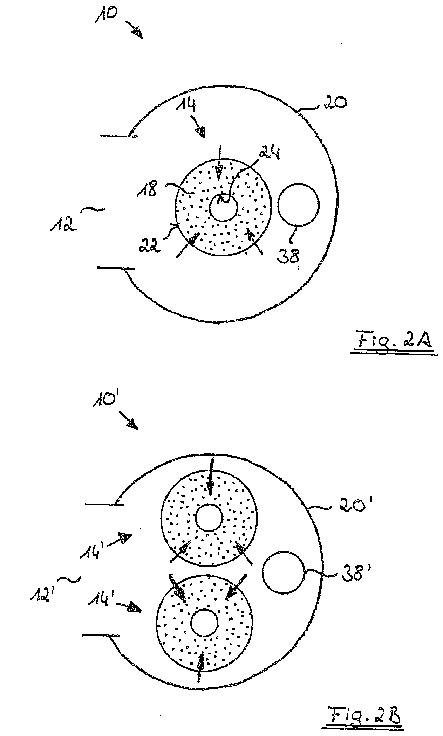

Wie insbesondere auch in der Figur 2A zu sehen ist, strömt das zu reinigende Abwasser über die gesamte radial äußere Umfangswand 22 des Gehäuses 16 zu dem Filtermedium 18. Dabei kompensieren sich von dem einströmenden Abwasser und dem hydraulischen Widerstand des Filtermediums 18 hervorgerufene Reaktionskräfte im Wesentlichen zu Null, da das Filtermedium 18 allseitig im Wesentlichen über den gesamten Umfang hinweg gleichmäßig angeströmt wird. Es ist daher nicht notwendig, das Filtermedium 18 in der Filtereinrichtung 14 besonders zu sichern. Das in horizontaler Richtung durch die radial äußere Umfangswand 22 in den Aufnahmeraum für das Filtermedium 18 eingetretene Abwasser durchströmt dann das Filtermedium 18, wobei Fremdstoffe im Abwasser ad- bzw. absorbiert werden. Das somit gefilterte Abwasser verlässt dann den Aufnahmeraum für das Filtermedium 18 durch die radial innere Umfangswand 24 des Gehäuses 16. Von dort strömt es anschließend aus der Filtereinrichtung 14 durch die Ablauföffnung 30.

Die Ablauföffnung 30 fluchtet mit einer Öffnung einer Zwischenwandung 32, welche sich in einer horizontalen Ebene erstreckt und den Schacht 20 in einen oberen Sammelraum 34 und einen unteren Sammelraum 36 unterteilt. Die Filtereinrichtung 14 steht dabei mit ihrem ganzen Gewicht auf der Zwischenwandung 32 auf, wobei ein in der unteren Begrenzungswand des Gehäuses 16 vorgesehener Dichtring 41 (siehe Figur 4A) dafür sorgt, dass kein Abwasser zwischen der unteren Begrenzungswand des Gehäuses 16 und der Zwischenwandung 32 unter Umgehung der Filtereinrichtung 14 hindurch strömen kann. Ferner kann zur einfachen Ausrichtung der Filtereinrichtung 14 im Schacht 20 an der Zwischenwandung 32 eine Positionierhilfe vorgesehen sein, wie weiter unten noch beschrieben wird. Die Zwischenwandung 32 dient in erster Linie dazu, das von dem Filtermedium 18 noch nicht gereinigte Abwasser im oberen Sammelraum 34 von dem von dem Filtermedium 18 bereits gereinigten Abwasser im unteren Sammelraum 36 zu trennen. Das von dem Filtermedium 18 gereinigte Abwasser kann aus dem unteren Sammelraum 36 über ein Steigrohr 38 zu einem Abwasserablauf 40 der Abwasserbehandlungsvorrichtung 10 strömen.

Das Steigrohr 38 weist einen Abschnitt 46 auf, der von einem zum Abwasserablauf 40 führenden Abschnitt abzweigt. Dieser abzweigende Abschnitt 46 des Steigrohrs 38 ist dabei nach oben offen ausgebildet. Er dient zum einen als Belüftungsvorrichtung, um sicher zu stellen, dass im oberen Sammelraum 34 und im unteren Sammelraum 36 des Schachts 20 auf gleicher Höhe jeweils gleiche Druckverhältnisse herrschen. Zudem dient der abzweigende Abschnitt 46 auch zu Wartungs- und Reinigungszwecken für den unteren Sammelraum 36 des Schachts 20. Durch den oben offenen, abzweigenden Schacht 46 können von oben entsprechende Reinigungsvorrichtungen durch das Steigrohr 38 hindurch zum unteren Sammelraum 36 eingeführt werden. Auch kann der oben offene, abzweigende Schacht 46 als Notüberlauf dienen, wodurch die gestrichelt dargestellte Überlaufleitung 27 eingespart werden kann.

Erfindungsgemäß ist eine untere Kante 42 des Abwasserablaufs 40 in Höhenrichtung über einem oberen Rand 44 des Gehäuses 16, bzw. allenfalls auf gleicher Höhe, angeordnet. Dies hat zur Folge, dass die Abwasserbehandlungsvorrichtung 10 im Normalbetriebszustand stets bis wenigstens zur Höhe der unteren Kante 42 des Abwasserablaufs 40 mit Abwasser gefüllt ist. Dies ist in Figur 1 durch eine gewellte Linie angedeutet. Somit wird das Filtermedium 18 im Normalbetriebszustand der Abwasserbehandlungsvorrichtung 10 stets aus im Wesentlichen horizontaler Richtung über seine gesamte Höhe allseitig angeströmt, so dass das Filtermedium 18 nirgends Trockenfallen und/oder ungleichmäßig stark von dem zu reinigenden Abwasser belastet wird. Somit kann die maximale Einsatzdauer des Filtermediums 18 genutzt werden, bevor dieses auszuwechseln ist.

In Figur 2B ist eine weitere Ausführungsform 10' einer erfindungsgemäßen Abwasserbehandlungsvorrichtung dargestellt deren Aufbau sich von jenem der Ausführungsform 10 gemäß Figuren 1 und 2A lediglich hinsichtlich der Anzahl der Filtereinrichtungen 14 unterscheidet. Daher ist in Figur 2B auch nur ein Schnitt ähnlich wie in Figur 2A dargestellt. Ferner sind in Figur 2B analoge Teile mit den gleichen Bezugszeichen versehen wie in den Figuren 1 und 2A, jedoch zusätzlich mit einem Strich. Schließlich wird die Abwasserbehandlungsvorrichtung 10' gemäß Figur 2B im Folgenden nur in soweit beschrieben, als sie sich von der Abwasserbehandlungsvorrichtung 10 gemäß den Figuren 1 und 2A unterscheidet, auf deren Beschreibung hiermit ansonsten ausdrücklich verwiesen sei.

Genauso wie bei der ersten Ausführungsform 10 ist in der Ausführungsform 10' gemäß Figur 2B ein Schacht 20' vorgesehen, in welchen von der Abwasserbehandlungsvorrichtung zu reinigendes Abwasser vermittels eines Abwasserzulaufs 12' eingeleitet wird. Ferner ist in Figur 2B auch ein Steigrohr 38' dargestellt, durch welches das gereinigte Abwasser zu einem nicht dargestellten Abwasserablauf der Abwasserbehandlungsvorrichtung 10' strömen kann. Im Unterschied zu der Ausführungsform 10 gemäß den Figuren 1 und 2A weist die Ausführungsform 10' gemäß Figur 2B jedoch zwei Filtereinrichtungen 14' auf, die nebeneinander und auf gleicher Höhe im Schacht 20' angeordnet sind. Die Filtereinrichtungen 14' sind dabei beide identisch zu der Filtereinrichtung 14 des ersten Ausführungsbeispiels ausgebildet. Auf eine nähere Beschreibung dieser Filtereinrichtungen 14' wird daher an dieser Stelle verzichtet.

Die in Figur 2B dargestellte Ausführungsform 10' weist gegenüber der in den Figuren 1 und 2A dargestellten Ausführungsform 10 den Vorteil auf, dass der Durchsatz an zu filterndem Abwasser durch die doppelte Anzahl an Filtereinrichtungen 14' auch in etwa verdoppelt werden kann. Um diesen Effekt zu erreichen sind lediglich geringfügige bauliche Änderungen der Abwasserbehandlungsvorrichtung 10 erforderlich. Zudem kommt, dass trotz höherem Durchsatz an zu filterndem Abwasser trotzdem relativ kleine und somit leichte Filtereinrichtungen 14' verwendet werden können, die sich auch noch mit üblicherweise verwendetem Hebezeug handhaben lassen.

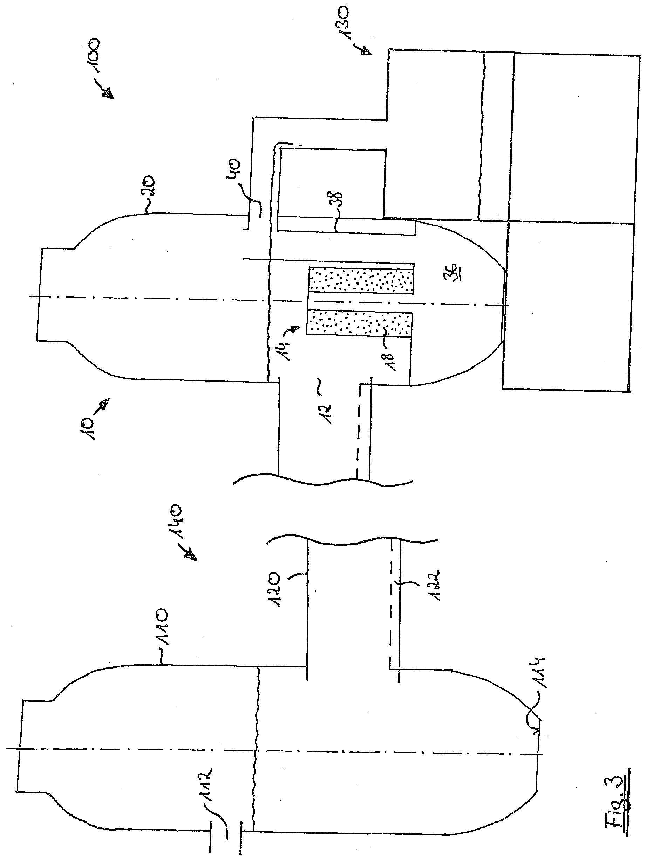

In Figur 3 ist eine Abwasserbehandlungsanordnung allgemein mit 100 bezeichnet. Diese umfasst neben der erfindungsgemäßen Abwasserbehandlungsvorrichtung 10 ferner noch einen Sedimentationsschacht 110, ein Sedimentationsrohr 120 und eine Rigole 130. Der Sedimentationsschacht 110 und das Sedimentationsrohr 120 bilden zusammen eine Vorreinigungsvorrichtung 140, welche der erfindungsgemäßen Abwasserbehandlungsvorrichtung 10 strömungstechnisch vorgelagert ist und mit dieser in Strömungsverbindung steht.

Das zu reinigende und anschließend in einer Rigole zu versickernde oder in ein Oberflächengewässer einzuleitende Abwasser, in der Regel Regenwasser, tritt durch einen weiteren Abwasserzulauf 112 in den Sedimentationsschacht 110 der Abwasserbehandlungsanordnung 100 ein. Grobe Feststoffpartikel, beispielsweise Kies oder Sand, welche eine gegenüber dem restlichen Abwasser höhere Dichte aufweisen, sinken im Sedimentationsschacht 110 zu dessen Boden 114, wo sich mit der Zeit eine Sedimentschicht ansammelt, welche in regelmäßigen Zeitintervallen bei der Wartung der Abwasserbehandlungsanlage 100 zu entfernen ist.

Vom Sedimentationsschacht 110 gelangt das zu behandelnde und bereits von groben Sedimentstoffen gereinigte Abwasser in das Sedimentationsrohr 120. In diesem können feinere Sedimentpartikel, die in dem Sedimentationsschacht 110 nicht zurückgehalten werden konnten, zu Boden des Sedimentationsrohrs 120 sinken, wo sie in einem stömungsberuhigten Sammelraum 122 zurückgehalten werden. Zur genaueren Ausgestaltung und Funktionsweise eines solchen Sedimentationsrohrs sei auf die DE 10 2004 008 960 A1 verwiesen. Die Länge des Sedimentationsrohrs sollte dabei insbesondere vom Verschmutzungsgrad oder/und von der geforderten Reinigungsleistung des zu reinigenden Abwassers abhängen. Ferner sei angemerkt, dass zusätzlich oder alternativ zu dem Sedimentationsrohr 120 auch eine Leichtflüssigkeitsabscheidevorrichtung in der Vorreinigungsvorrichtung 140 vorgesehen sein könnte, um als Leichtflüssigkeit vorliegende Verunreinigungen aus dem Abwasser zurückhalten zu können.

Das von der Vorreinigungsvorrichtung 140 vorgereinigte Abwasser tritt dann aus dem Sedimentationsrohr 120 aus und über den Abwasserzulauf 12 in die erfindungsgemäße Abwasserbehandlungsvorrichtung 10 ein. Zum Aufbau und zu der Funktionsweise der Abwasserbehandlungsvorrichtung 10, und insbesondere der darin vorgesehenen Filtereinrichtung 14, sei auf die obige Beschreibung verwiesen. Nachdem das Abwasser das Filtermedium 18 der Filtereinrichtung 14 durchströmt hat, wird das nunmehr gereinigte Abwasser über den unteren Sammelraum 36 des Schachts 20 und über das Steigrohr 38 zum Abwasserablauf 40 geführt, von wo aus es dann zu der Rigole 130 oder dem Oberflächengewässer geleitet wird.

In dem in Figur 3 dargestellten Ausführungsbeispiel ist die Rigole 130 aus drei Rigoleneinheiten gebildet, welche beispielsweise aus der EP 1 260 640 A1 bekannt sind. Die Rigole 130 dient als Zwischenspeicher, um das gereinigte Abwasser möglichst kontinuierlich in das die Abwasserbehandlungsanordnung 100 umgebende Erdreich abzugeben. Das zu versickernde Abwasser, insbesondere Regenwasser, vor dem Versickern zu reinigen, ist zum einen deshalb wichtig, weil ansonsten gefährliche Schadstoffe, wie z.B. Abriebe von Autoreifenbelägen in das Erdreich und somit auch über das Grundwasser in das Trinkwasser gelangen könnten. Zum anderen ist eine Zufuhr von möglichst sedimentfreiem Abwasser zu der Rigole 130 wichtig, damit diese möglichst lange, ohne gewartet werden zu müssen, ihre volle Funktionsfähigkeit beibehalten kann. Sedimente würden sich sonst nämlich sehr schnell an den Innenflächen der Vliesumhüllung der Rigole anlagern und somit den Durchtritt des zu versickernden Abwassers in das Erdreich verhindern oder empfindlich beeinträchtigen.

Es sei hier darauf hingewiesen, dass die erfindungsgemäße Abwasserbehandlungsvorrichtung auch zusammen mit einer Anlage zur Regenwasserbewirtschaftung betrieben werden könnte, wie sie aus der DE 10 2008 007 227 A1 der Anmelderin bekannt ist, wobei sie insbesondere den dort offenbarten Filter ersetzen könnte.

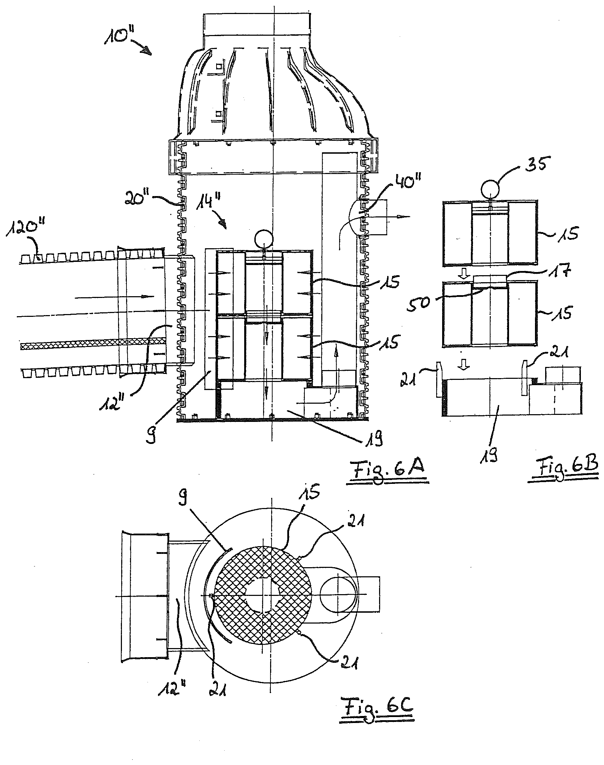

Eine dritte Ausführungsform der erfindungemäßen Abwasserbehandlungsvorrichtung ist in den Figuren 6A bis 6C gezeigt, wobei sich diese Ausführungsform von den ersten beiden Ausführungsformen hauptsächlich darin unterscheidet, dass die Filtereinrichtung modular aufgebaut ist. Daher sind in den Figuren 6A bis 6C analoge oder/und funktionsgleiche Bauteile und Bauteilabschnitte mit den gleichen Bezugszeichen versehen wie in den Figuren 1 und 2A, jedoch zusätzlich mit zwei Strichen. Schließlich wird die Abwasserbehandlungsvorrichtung gemäß den Figuren 6A bis 6C im Folgenden nur in soweit beschrieben, als sie sich von der Abwasserbehandlungsvorrichtung 10 gemäß den Figuren 1 und 2A unterscheidet, auf deren Beschreibung hiermit ansonsten ausdrücklich verwiesen sei.

Die Abwasserbehandlungsvorrichtung 10" gemäß der dritten Ausführungsform umfasst ebenfalls einen Schacht 20" mit einem Abwasserzulauf 12", einem Abwasserablauf 40" und einer strömungstechnisch dazwischen angeordneten Filtereinrichtung 14". Wie in Figur 6A angedeutet ist, kann der Abwasserzulauf 12" mit einem Sedimentationsrohr 120" verbunden sein, ähnlich wie bei der Abwasserbehandlungsanordnung 100 gemäß Figur 3. Der wesentliche Unterschied zwischen der Abwasserbehandlungsvorrichtung 10" gemäß der dritten Ausführungsform und den Abwasserbehandlungsvorrichtungen gemäß den ersten beiden Ausführungsformen besteht darin, dass bei der Abwasserbehandlungsvorrichtung 10" die Filtereinrichtung 14" aus einer Mehrzahl, nämlich zwei, Filtereinheiten 15 gebildet ist, die in vertikaler Richtung übereinander gestapelt sind. Die obere der beiden Filtereinheiten 15 ist dabei identisch zu der in den Figuren 4A, 4B und 5 beschriebenen Filtereinrichtung 14 aufgebaut, auf deren ausführliche Beschreibung hiermit verwiesen wird. Die untere der beiden Filtereinheiten 15 ist im Wesentlichen identisch zu der oberen der beiden Filtereinheiten 15 gebildet, wobei lediglich anstelle der oberen Begrenzungswand 26 ein Zwischeneinsatz 17 vorgesehen ist, welcher dazu geeignet ist, die beiden Filtereinheiten 15 relativ zueinander auszurichten, insbesondere zu zentrieren. Das Gesamtgehäuse der Filtereinrichtung 14" besteht somit aus mehreren Gehäuseeinheiten, wobei jeder Filtereinheit 15 genau eine Gehäuseeinheit zugeordnet ist.

Dieser modulare Aufbau der Filtereinheit 14" erlaubt es, die Größe des Filters variabel, zumindest stufenweise, an die Größe der anzuschließenden Wassereinzugsfläche anzupassen, ohne das hierzu auf Schächte mit einem größeren Durchmesser zurückgegriffen würden müsste. Vielmehr können weiterhin die üblichen, standardisierten Schächte verwendet werden, wobei allenfalls deren Länge in vertikaler Richtung anzupassen ist. Die weiter unten beschriebene vierte Ausführungsform veranschaulicht ein entsprechendes Beispiel. Auch passen die einzelnen Filtereinheiten 15 problemlos durch die üblichen Schachtabdeckungen, so dass teure Sonderkonstruktionen überflüssig sind. Ferner bleibt die Größe und das Gewicht der einzelnen Filtereinheiten 15 auch bei relativ großen, anzuschließenden Wassereinzugsflächen gut handhabbar, so dass für die Wartung auf den Einsatz von Autokränen verzichtet werden kann. Vielmehr kann die Wartung mittels eines üblichen Saug-Spül-Fahrzeugs durchgeführt werden. Das Hubwerkzeug dieses Saug-Spül-Fahrzeugs kann beispielsweise an dem Ring 35 der obersten Filtereinheit 15 oder einer bügelförmigen Querstange 50 der unteren Filtereinheit 15 angreifen.

Die Abwasserbehandlungsvorrichtung 10" gemäß der dritten Ausführungsform umfasst anstelle einer Zwischenwandung 32 einen Sockel 19, welcher fest am Boden des Schachts 20" angebracht ist. Der Sockel 19 erfüllt aber im Wesentlichen genau die gleiche Funktion wie die oben beschriebene Zwischenwandung 32. Zur leichteren Positionierung des untersten der beiden Filtereinheiten 15 umfasst der Sockel 19 jedoch zusätzlich noch eine Positionierhilfe 21 in Form von drei vertikal ausgerichteten Stäben 21, deren obere Längsenden derart abgeschrägt sind, dass die drei Stäbe 21 wie ein Trichter das Positionieren der untersten Filtereinheit 15 auf dem Sockel 19 erleichtern. Im montierten Zustand der Filtereinrichtung 14" umgeben die drei Stäbe 21 dabei die äußere Umfangswand 22" der untersten Filtereinheit 15 mit gleichen Winkelabständen zueinander. Durch die Positionierhilfe, welche auch bei den zuvor beschriebenen Ausführungsformen der erfindungsgemäßen Abwasserbehandlungsvorrichtung zum Einsatz kommen können, wird insbesondere die Montage der Filtereinrichtung im Schacht ohne ein Hinabsteigen stark vereinfacht. Die Montage der Abwasserbehandlungsvorrichtung 10" ist schematisch in Figur 6B angedeutet.

Ferner umfasst die Abwasserbehandlungsvorrichtung 10" noch eine Prallplatte 9, welche zwischen dem Abwasserzulauf 12" und der Filtereinrichtung 14" im Schacht 20" angeordnet ist und die Filtereinrichtung 14" bogenförmig umgibt (siehe insbesondere Figur 6C). Diese Prallplatte 9 dient als zusätzliche Sicherheitsmaßnahme für den Fall, dass sedimentierbare Partikel nicht in der strömungstechnisch vor der Abwasserbehandlungsvorrichtung 10" angeordneten Vorreinigungsvorrichtung, etwa dem Sedimentationsrohr 120" zurückgehalten werden konnten. Durch die Prallplatte 9 wird verhindert, dass solche Partikel direkt von dem Abwasserzulauf 12" auf die Filtereinrichtung 14" zuströmen können. Vielmehr werden sie durch die Prallplatte 9 umgelenkt, wobei sie im Schacht 20" um den Sockel 19 herum zu Boden sinken können und somit nicht den Filter belasten. Es sei an dieser Stelle angemerkt, dass die Prallplatte 9 genauso auch bei den zuvor beschriebenen Ausführungsformen der erfindungemäßen Abwasserbehandlungsvorrichtung eingesetzt werden kann.

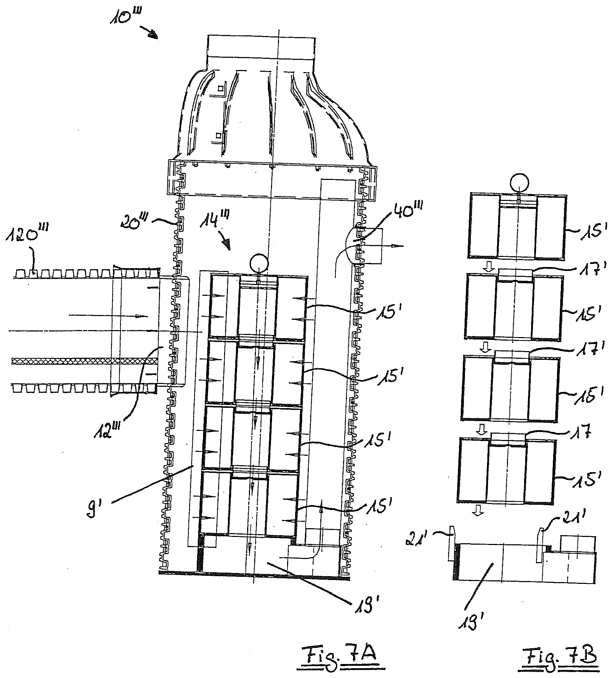

Eine vierte Ausführungsform der erfindungemäßen Abwasserbehandlungsvorrichtung ist in den Figuren 7A und 7B gezeigt, wobei sich diese Ausführungsform von der dritten Ausführungsformen hauptsächlich darin unterscheidet, dass die Filtereinrichtung anstelle aus zwei Filtereinheiten aus vier Filtereinheiten gebildet ist. Ansonsten entsprechen die Darstellungen in den Figuren 7A und 7B aber im Wesentlichen den Darstellungen in den Figuren 6A und 6B. Daher sind in den Figuren 7A und 7B analoge oder/und funktionsgleiche Bauteile und Bauteilabschnitte mit den gleichen Bezugszeichen versehen wie in den 6A bis 6C, jedoch zusätzlich mit einem weiteren Strich. Schließlich wird die Abwasserbehandlungsvorrichtung 10"' gemäß den Figuren 7A und 7B im Folgenden nur in soweit beschrieben, als sie sich von der Abwasserbehandlungsvorrichtung 10" gemäß der dritten Ausführungsform unterscheidet, auf deren Beschreibung hiermit ansonsten ausdrücklich verwiesen sei.

Die Abwasserbehandlungsvorrichtung 10"' gemäß der vierten Ausführungsform umfasst ebenfalls einen Schacht 20"' mit einem Abwasserzulauf 12"', einem Abwasserablauf 40"' und einer strömungstechnisch dazwischen angeordneten Filtereinrichtung 14"'. Wie in Figur 7A angedeutet ist, kann der Abwasserzulauf 12"' mit einem Sedimentationsrohr 120"' verbunden sein, ähnlich wie bei der Abwasserbehandlungsanordnung 100 gemäß Figur 3. Der wesentliche Unterschied zwischen der Abwasserbehandlungsvorrichtung 10"' gemäß der vierten Ausführungsform und der Abwasserbehandlungsvorrichtung 10" gemäß der dritten Ausführungsformen besteht darin, dass bei der Abwasserbehandlungsvorrichtung 10"' die Filtereinrichtung 14"' aus vier Filtereinheiten 15" anstatt aus zwei Filtereinheiten 15' gebildet ist, die in vertikaler Richtung übereinander gestapelt sind. Der Schacht 20'" gemäß der vierten Ausführungsform ist entsprechend länger ausgebildet als der Schacht 20" gemäß der dritten Ausführungsform. Die oberste der vier Filtereinheit 15' ist wieder identisch zu der in den Figuren 4A, 4B und 5 beschriebenen Filtereinrichtung 14 aufgebaut, auf deren ausführliche Beschreibung verwiesen wird. Die unteren drei Filtereinheiten 15' sind im Wesentlichen identisch zu der obersten Filtereinheit 15' gebildet, wobei jeweils lediglich anstelle der oberen Begrenzungswand 26 ein Zwischeneinsatz 17' vorgesehen ist, welcher dazu geeignet ist, zwei jeweils in Höhenrichtung unmittelbar benachbarte Filtereinheiten 15' relativ zueinander auszurichten, insbesondere zu zentrieren. Das Gesamtgehäuse der Filtereinrichtung 14"' besteht somit aus mehreren Gehäuseeinheiten, wobei jeder Filtereinheit 15' genau eine Gehäuseeinheit zugeordnet ist. Die Montage der aus den vier Filtereinheiten 15' modular aufgebauten Filtereinrichtung 14"' ist in Figur 7B schematisch angedeutet.

Ferner sei darauf hingewiesen, dass auch die Abwasserbehandlungsvorrichtung 10"' gemäß der vierten Ausführungsform, genauso wie die Abwasserbehandlungsvorrichtung 10" gemäß der dritten Ausführungsform, eine Prallplatte 9' und einen Sockel 19' mit einer daran montierten Positionierhilfe 21' in Form von sich vertikal erstreckenden Stäben 21' aufweist.

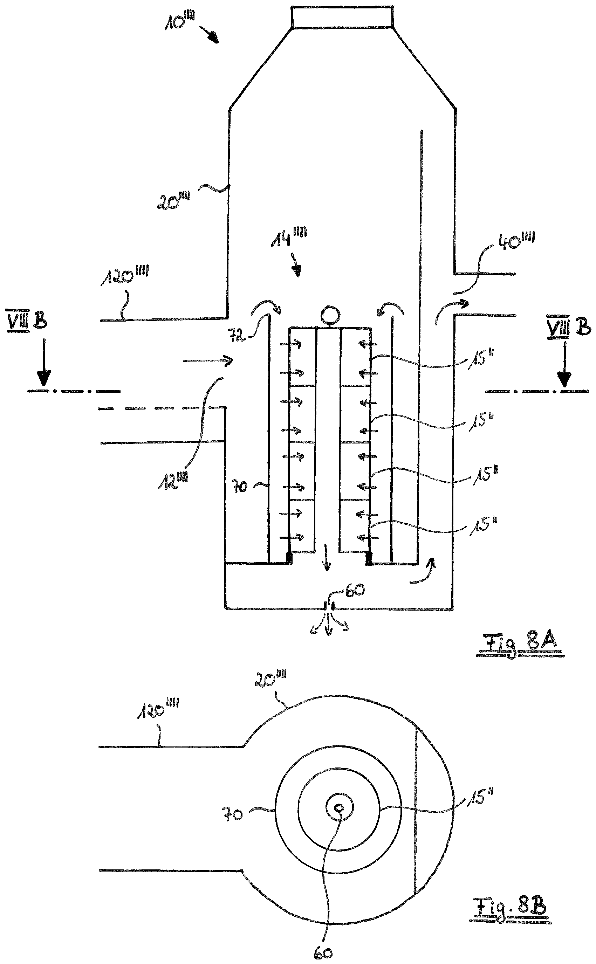

Eine fünfte Ausführungsform der erfindungemäßen Abwasserbehandlungsvorrichtung ist schematisch in den Figuren 8A und 8B gezeigt, wobei sich diese Ausführungsform von der vierten Ausführungsformen hauptsächlich nur darin unterscheidet, dass am Schachtboden eine Öffnung eines Versickerungsablaufs und anstelle der Prallplatte eine die Filtereinrichtung ringsum umgebende Überlaufwand vorgesehen ist. Ansonsten entspricht die Darstellungen in der Figuren 8A aber im Wesentlichen der Darstellung in Figur 7A. Daher sind in den Figuren 8A und 8B analoge oder/und funktionsgleiche Bauteile und Bauteilabschnitte mit den gleichen Bezugszeichen versehen wie in den 7A und 7B, jedoch zusätzlich mit einem weiteren Strich. Schließlich wird die Abwasserbehandlungsvorrichtung 10"" gemäß den Figuren 8A und 8B im Folgenden nur in soweit beschrieben, als sie sich von der Abwasserbehandlungsvorrichtung 10'" gemäß der vierten Ausführungsform unterscheidet, auf deren Beschreibung hiermit ansonsten ausdrücklich verwiesen sei.

Die Abwasserbehandlungsvorrichtung 10"" gemäß der fünften Ausführungsform umfasst ebenfalls einen Schacht 20"" mit einem Abwasserzulauf 12"", einem Abwasserablauf 40"" und einer strömungstechnisch dazwischen angeordneten Filtereinrichtung 14"", welche aus vier übereinander gestapelten Filtereinheiten 15" gebildet ist, die im Wesentlichen jeweils die Form eines Hohlkreiszylinders aufweisen. Wie in Figur 8A angedeutet ist, kann der Abwasserzulauf 12"" mit einem Sedimentationsrohr 120"" verbunden sein.

Ein wesentlicher Unterschied zwischen der Abwasserbehandlungsvorrichtung 10"" gemäß der fünften Ausführungsform und der Abwasserbehandlungsvorrichtung 10"' gemäß der vierten Ausführungsformen besteht darin, dass bei der Abwasserbehandlungsvorrichtung 10"" gemäß der fünften Ausführungsform am Boden des Schachts 20"" eine Öffnung 60 eines Versickerungsablaufs vorgesehen ist. Durch diese kann, neben Abwasserablauf 40"" Abwasser aus der Abwasserbehandlungsvorrichtung 10"" austreten. Jedoch ist die in Form einer Düse ausgebildete Öffnung 60 des Versickerungsablaufs deutlich kleiner als die entsprechende Öffnung des Abwasserablaufs 40"". Die Öffnung 60 des Versickerungsablaufs ist in Höhenrichtung genau unter der Filtereinrichtung 14"" angeordnet, so dass sie von oben gut zugänglich und damit, beispielsweise mittels eines Hochdruckreinigers, gut zu reinigen ist, wenn die Schachtabdeckung abgenommen worden ist und die Filtereinheiten 15", zum Beispiel um diese auszuwechseln, entfernt worden sind.

Die Öffnung 60 weist zudem gegenüber dem restlichen Schachtboden einen erhöhten Einlass auf, so dass sie weniger leicht von feinen Partikeln, die unter Umständen durch die Filtereinrichtung 14"" gelangen konnten, zugesetzt werden kann.

Ein weiterer wesentlicher Unterschied zwischen der Abwasserbehandlungsvorrichtung 10"" gemäß der fünften Ausführungsform und der Abwasserbehandlungsvorrichtung 10"' gemäß der vierten Ausführungsformen besteht darin, dass erstere anstelle der Prallplatte 9' eine die Filtereinrichtung 14"" im Wesentlichen konzentrisch ringsum umgebende Überlaufwand 70 aufweist, deren oberer Rand eine Überlaufschwelle 72 bildet, über welche das von dem Abwasserzulauf 12"" in die Abwasserbehandlungsvorrichtung 10"" eintretende Abwasser strömen muss, um zu der Filtereinrichtung 14"" zu gelangen. Die Überlaufschwelle 72 ist dabei in Höhenrichtung über dem oberen Rand der Filtereinrichtung 14"" angeordnet, so dass die Filtereinrichtung 14"" im Normalbetriebszustand im Dauerstau betrieben wird. Gleichzeitig ist die Überlaufschwelle 72 im Wesentlichen auf der gleichen Höhe wie die untere Kante des Abwasserablaufs 40"" angeordnet. Aufgrund dieser Tatsache und aufgrund der Tatsache, dass der Innendurchmesser der Überlaufwand 70, welche in Form eines geraden Hohlkreiszylinders ausgebildet ist, nicht sehr viel größer als der Außendurchmesser der ebenfalls zylindrisch ausgebildeten Filtereinrichtung 14"" ist, strömt nur ein verhältnismäßig kleines Volumen durch die Filtereinrichtung 14"', wenn diese trocken fällt und dabei von dem Normalbetriebszustand in einen Bereitschaftszustand übergeht.

Während eines Regenereignisses wird der Abwasserbehandlungsvorrichtung 10"" über den Abwasserzulauf 12"" im Wesentlichen kontinuierlich zu behandelndes Regenwasser zugeführt. Der Regenwasserpegel im gesamten Schacht 20"" liegt einiges über der unteren Kante des Abwasserablaufs 40"" und somit auch über der Überlaufschwelle 72 der Überlaufwand 70. Die Filtereinrichtung 14"" wird folglich im Dauerstau betrieben und es findet im Wesentlichen keine ungleichmäßige Beanspruchung unterschiedlicher Bereich der Filtereinrichtung 14"" statt. Nach der Behandlung des Regenwassers durch die Filtereinrichtung 14"" verlässt ein Großteil des gereinigten Regenwassers im Normalbetriebszustand die Abwasserbehandlungsvorrichtung 10"" über den Abwasserablauf 40"", während nur ein kleiner Bruchteil die Abwasserbehandlungsvorrichtung 10"" über die Öffnung 60 des Versickerungsablaufs verlässt.

Hört es auf, zu regnen, so dass der Abwasserbehandlungsvorrichtung 10"" kein weiteres zu behandelndes Regenwasser zugeführt wird, fällt der Abwasserpegel im Schacht 20"" schnell ab. Radial außerhalb der Überlaufwand 70 bleibt der Pegel dann im Wesentlichen auf der Höhe der Überlaufschwelle 72, bzw. der unteren Kante des Abwasserablaufs 40"" stehen. Radial innerhalb der Überlaufwand 70 sinkt der Pegel dagegen langsam weiter ab, so dass irgendwann die gesamte Filtereinrichtung 14"" trocken gefallen ist. Der weitere Abfall wird durch den Austritt des gereinigten Regenwassers durch die Öffnung 60 des Versickerungsauslasses verursacht. Dieser ist derart konfiguriert, dass die Filtereinrichtung 14"" innerhalb von 1 bis 24 Stunden trocken fällt, sofern kein weiteres Abwasser in die Abwasserbehandlungsvorrichtung 10"" nachströmt. Durch das Trockenfallen wird verhindert, dass sich, insbesondere in warmen Perioden, ein so genannter Biofilm an dem Filtermedium bilden kann, welcher der Leistungsfähigkeit der Filtereinrichtung 14"" abträglich ist. Die Zeitspanne von 1 bis 24 Stunden ist dabei so gewählt, dass sichergestellt wird, dass im Normalbetriebszustand der Großteil des gereinigten Regenwassers die Abwasserbehandlungsvorrichtung 10"" über den Abwasserablauf 40"" und nicht über die Öffnung 60 des Versickerungsablaufs verlässt, so dass die Filtereinrichtung 14"" im Normalbetriebszustand stets im Dauerstau betrieben wird und keine ungleichmäßige Beanspruchung stattfindet. Gleichzeitig wird sichergestellt, dass der Filter nach einem Regenereignis relativ schnell trocken fallen kann, um die Bildung des Biofilms zu vermeiden.

Nachzutragen ist noch, dass die Ausführungsformen gemäß Figuren 2B und 6A, 7A bzw. 8A miteinander kombiniert werden können, indem bei Nebeneinanderanordnung einer Mehrzahl von Filtereinrichtungen gemäß Figur 2B eine, mehrere oder alle dieser Filtereinrichtung modular aus einer Mehrzahl von übereinander angeordneten Filtereinheiten ausgebildet sein kann, wie dies in Figur 6A bzw. in Figur 7A dargestellt ist.

## Patentansprüche

1. Abwasserbehandlungsvorrichtung (10; 10'; 10"; 10"'; 10"") zum Behandeln von Abwasser, insbesondere Regenwasser, umfassend:
- einen Abwasserzulauf (12; 12'; 12"; 12'"; 12""),
- einen Abwasserablauf (40; 40"; 40"'; 40"") und
- wenigstens eine strömungstechnisch zwischen dem Abwasserzulauf (12; 12'; 12"; 12"'; 12"") und dem Abwasserablauf (40; 40"; 40"'; 40"") angeordnete Filtereinrichtung (14; 14'; 14"; 14'"; 14"") mit einem Gehäuse (16), in dem ein Filtermedium (18) zum Ad- oder/und Absorbieren von Fremdstoffen aus dem Abwasser aufgenommen ist, wobei die Wandung des Gehäuses (16) lediglich in horizontaler Richtung allseitig von dem zu behandelnden Abwasser durchströmbar ausgebildet ist,
**dadurch gekennzeichnet, dass** eine untere Kante (42) des Abwasserablaufs (40; 40"; 40"'; 40"") in Höhenrichtung über dem oberen Rand (44) des Gehäuses (16) der wenigstens einen Filtereinrichtung (14; 14'; 14"; 14'"; 14"") angeordnet ist, allenfalls jedoch auf gleicher Höhe,
wobei die Abwasserbehandlungsvorrichtung ferner eine Zwischenwandung (32) oder/und einen Sockel (19; 19') aufweist, auf der bzw. dem die wenigstens eine Filtereinrichtung (14; 14'; 14"; 14'"; 14"") aufsteht, wobei eine in der Zwischenwandung (32) oder/und dem Sockel (19; 19') vorgesehene Öffnung mit einer Ablauföffnung (30) der wenigstens einen Filtereinrichtung (14; 14'; 14"; 14"'; 14"") fluchtet, und
dass ein Steigrohr (38) vorgesehen ist, welches derart eingerichtet ist, dass durch es hindurch unterhalb der Zwischenwandung (32) bzw. des Sockels (19; 19') gesammeltes, bereits gereinigtes Abwasser aufsteigt, wozu es von der Zwischenwandung (32) oder/und dem Sockel (19; 19') nach oben absteht und mit dem Abwasserablauf (40; 40"; 40"'; 40"") verbunden ist, wobei das Steigrohr (38) einen, nach oben offenen Abschnitt (46) aufweist, der von einem zum Abwasserablauf (40; 40"; 40"'; 40"") führenden Abschnitt abzweigt, und
dass die wenigstens eine Filtereinrichtung (14; 14'; 14"; 14"'; 14"") dazu eingerichtet ist, im Betrieb längs ihrer gesamten Umfangsfläche (22) um eine vertikal verlaufende Achse von dem zu reinigenden Abwasser umgeben zu sein.

2. Abwasserbehandlungsvorrichtung nach Anspruch 1,
**dadurch gekennzeichnet, dass** das Gehäuse (16) der wenigstens einen Filtereinrichtung (14; 14'; 14"; 14'"; 14"") zylinderförmig ausgebildet ist, wobei sich die Zylinderachse (Z) im Wesentlichen vertikal erstreckt.

3. Abwasserbehandlungsvorrichtung nach einem der Ansprüche 1 bis 2,
**dadurch gekennzeichnet, dass** das Gehäuse (16) eine um eine im Wesentlichen vertikale Achse umlaufende äussere Umfangswand (22) und eine um eine vertikale Achse umlaufende innere Umfangswand (24) umfasst, die zwischen sich einen Aufnahmeraum für das Filtermedium (18) bilden und beide von Abwasser durchströmbar ausgebildet sind, und dass das Gehäuse (16) ferner eine obere Begrenzungswand (26) aufweist, die das Gehäuse (16) nach oben vollflächig flüssigkeitsdicht abschliesst, während eine ebenfalls abwasserdicht ausgebildete untere Begrenzungswand (28) lediglich den Aufnahmeraum nach unten flüssigkeitsdicht abschliesst.

4. Abwasserbehandlungsvorrichtung nach Anspruch 3,
**dadurch gekennzeichnet, dass** die obere Begrenzungswand (26) eine Einhakvorrichtung (35), etwa einen Ring (35) oder eine Bügelstange (50), umfasst, zum Hochziehen bzw. Herablassen wenigstens eines Abschnitts der Filtereinrichtung (14; 14'; 14"; 14"'; 14"") innerhalb der Abwasserbehandlungsvorrichtung (10; 10'; 10"; 10"'; 10"").

5. Abwasserbehandlungsvorrichtung nach Anspruch 3 oder 4, **dadurch gekennzeichnet, dass** die obere Begrenzungswand (26) als ein von dem restlichen Gehäuse (16) abnehmbarer Deckel ausgebildet ist.

6. Abwasserbehandlungsvorrichtung nach einem der Ansprüche 3 bis 5,
**dadurch gekennzeichnet, dass** die äussere Umfangswand (22) und die innere Umfangswand (24) des Gehäuses (16) jeweils eine Mehrzahl von von dem Abwasser durchströmbaren Durchbrechungen (23) aufweisen, wobei zwischen dem Filtermedium (18) auf der einen Seite und der äusseren Umfangswand (24) oder/und der inneren Umfangswand (22) auf der anderen Seite jeweils eine Dränschicht (29) angeordnet ist, und wobei vorzugsweise zwischen der äusseren Umfangswand (22) bzw. der inneren Umfangswand (24) und der dieser Wand (22, 24) jeweils zugeordneten Dränschicht (29) eine Maschenschicht (31) angeordnet ist, welche eine Maschenweite aufweist, die kleiner als die kleinste Korngrösse des verwendeten Filtermediums (18) ist.

7. Abwasserbehandlungsvorrichtung nach einem der Ansprüche 1 bis 6,
**dadurch gekennzeichnet, dass** die Zwischenwandung (32) oder/und der Sockel (19; 19') eine Positionierhilfe (21; 21') aufweist, um das Positionieren der wenigstens einen Filtereinrichtung (14, 14'; 14"; 14"'; 14"") zu erleichtern.

8. Abwasserbehandlungsvorrichtung nach einem der Ansprüche 1 bis 7,
**dadurch gekennzeichnet, dass** die Abwasserbehandlungsvorrichtung (10"; 10"') ferner eine Prallplatte (9; 9') umfasst, welche zwischen dem Abwasserzulauf (12", 12"') und der Filtereinrichtung (14", 14"') angeordnet ist und welche vorzugsweise die Filtereinrichtung (14", 14'") abschnittsweise umgibt.

9. Abwasserbehandlungsvorrichtung nach einem der Ansprüche 1 bis 8,
**dadurch gekennzeichnet, dass** wenigstens eine der wenigstens einen Filtereinrichtung (14"; 14'"; 14"") wenigstens zwei Filtereinheiten (15; 15'; 15") umfasst, wobei jede Filtereinheit (15; 15'; 15") eine Gehäuseeinheit aufweist, in dem das Filtermedium (18) zum Ad- oder/und Absorbieren von Fremdstoffen aus dem Abwasser aufgenommen ist, und wobei im Betriebszustand der Abwasserbehandlungsvorrichtung (10"; 10'"; 10"") die wenigstens zwei Filtereinheiten (15; 15'; 15") in vertikaler Richtung übereinander gestapelt sind.

10. Abwasserbehandlungsvorrichtung nach Anspruch 9,
**dadurch gekennzeichnet, dass** zwischen zwei in Höhenrichtung unmittelbar aufeinanderfolgende Filtereinheiten (15; 15') ein Zwischeneinsatz (17; 17') vorgesehen ist, zum Ausrichten, insbesondere zum Zentrieren, der beiden in Höhenrichtung unmittelbar aufeinander folgenden Filtereinheiten (15; 15') relativ zueinander.

11. Abwasserbehandlungsvorrichtung nach einem der Ansprüche 1 bis 10,
**dadurch gekennzeichnet, dass** sie (10"") ferner an einer strömungstechnisch zwischen der wenigstens einen Filtereinrichtung (14"") und dem Abwasserablauf (40"") gelegenen Stelle einen wenigstens eine Öffnung (60) aufweisenden Versickerungsablauf umfasst, welcher derart konfiguriert ist, dass die wenigstens eine Filtereinrichtung (14"") in einem Zeitraum von 1 bis 24 Stunden, vorzugsweise von 5 bis 10 Stunden, trocken fällt, sofern der Abwasserbehandlungsvorrichtung (10"") in diesem Zeitraum kein weiteres Abwasser, insbesondere Regenwasser, zugeführt wird.

12. Abwasserbehandlungsvorrichtung nach einem der Ansprüche 1 bis 11,
**dadurch gekennzeichnet, dass** sie (10"") ferner eine strömungstechnisch zwischen dem Abwasserzulauf (12"") und der wenigstens einen Filtereinrichtung (14"") angeordnete Überlaufschwelle (72) umfasst, über welche das durch den Abwasserzulauf (12"") in die Abwasserbehandlungsvorrichtung (10"") einströmende und zu behandelnde Abwasser treten muss, um die wenigstens eine Filtereinrichtung (14"") zu erreichen, wobei die Überlaufschwelle (72) in Höhenrichtung über dem oberen Rand des Gehäuses der wenigstens einen Filtereinrichtung (14"") angeordnet ist, allenfalls jedoch auf gleicher Höhe.

13. Abwasserbehandlungsanlage (100) umfassend die Abwasserbehandlungsvorrichtung (10) nach einem der vorhergehenden Ansprüche, sowie eine Vorreinigungsvorrichtung (140), wie etwa ein Sedimentationsrohr (120), wobei die Vorreinigungsvorrichtung (140) der Abwasserbehandlungsvorrichtung (10) strömungstechnisch vorgelagert ist und mit dem Abwasserzulauf (12) der Abwasserbehandlungsvorrichtung (10) in Strömungsverbindung steht.

14. Abwasserbehandlungsanlage nach Anspruch 13,
**dadurch gekennzeichnet, dass** sie ferner eine zur Versickerung des gefilterten Abwassers dienende Rigole (130) umfasst, wobei die Rigole (130) der Abwasserbehandlungsvorrichtung (10) strömungstechnisch nachgelagert ist und mit dem Abwasserablauf (40) der Abwasserbehandlungsvorrichtung (10) in Strömungsverbindung steht.

## Claims

1. Wastewater treatment apparatus (10; 10'; 10"; 10"', 10"") for treating wastewater, in particular rainwater, comprising:
- a wastewater inlet (12; 12'; 12"; 12"'; 12""),
- a wastewater outlet (40; 40"; 40"'; 40"") and
- at least one filter device (14; 14'; 14"; 14"'; 14"") which is fluidically arranged between the wastewater inlet (12; 12'; 12"; 12"'; 12"") and the wastewater outlet (40; 40"; 40"'; 40"") and comprises a housing (16) in which a filter medium (18) for adsorbing and/or absorbing impurities from the wastewater is received, the wall of the housing (16) being designed such that the wastewater to be treated can flow therethrough on all sides in the horizontal direction only,
**characterised in that** a lower edge (42) of the wastewater outlet (40; 40"; 40"'; 40"") is arranged above the upper edge (44) of the housing (16) of the at least one filter device (14; 14'; 14"; 14'"; 14"") in the vertical direction, or at least at the same height, the wastewater treatment apparatus further comprising a partition (32) and/or a base (19; 19') on which the at least one filter device (14; 14'; 14"; 14"'; 14"") stands, an opening provided in the partition (32) and/or in the base (19; 19') being aligned with an outlet opening (30) of the at least one filter device (14; 14'; 14"; 14'"; 14""),
**in that** a riser (38) is provided, which is designed such that wastewater which has already been purified and has collected underneath the partition (32) and/or the base (19; 19') rises in said riser, for which purpose said riser projects upwards from the partition (32) and/or the base (19; 19') and is connected to the wastewater outlet (40; 40"; 40"'; 40""), the riser (38) comprising a portion (46) which is open at the top and which branches off from a portion which leads to the wastewater outlet (40; 40"; 40"'; 40""),
and **in that** the at least one filter device (14; 14'; 14"; 14"'; 14"") is designed so as to be surrounded, during operation, by the wastewater to be purified over the entire peripheral surface (22) of said filter device around a vertically extending axis.

2. Wastewater treatment apparatus according to claim 1, **characterised in that** the housing (16) of the at least one filter device (14; 14'; 14"; 14"'; 14"") is cylindrical, the cylinder axis (Z) extending substantially vertically.

3. Wastewater treatment apparatus according to any of claims 1 to 2, **characterised in that** the housing (16) comprises an outer peripheral wall (22) which surrounds a substantially vertical axis, and an inner peripheral wall (24) which surrounds a vertical axis, which walls form a receiving space therebetween for the filter medium (18) and are both designed such that wastewater can flow therethrough, and **in that** the housing (16) further comprises an upper limiting wall (26) which closes the housing (16) at the top over the entire surface thereof in a fluid-tight manner, while a likewise fluid-tight lower limiting wall (28) closes only the receiving space at the bottom in a fluid-tight manner.

4. Wastewater treatment apparatus according to claim 3, **characterised in that** the upper limiting wall (26) comprises a hook device (35), for example a ring (35) or a bent rod (50), for pulling up or lowering at least one portion of the filter device (14; 14'; 14"; 14"'; 14"") within the wastewater treatment apparatus (10; 10'; 10"; 10'", 10"").

5. Wastewater treatment apparatus according to either claim 3 or claim 4, **characterised in that** the upper limiting wall (26) is designed as a cover which can be removed from the rest of the housing (16).

6. Wastewater treatment apparatus according to any of claims 3 to 5, **characterised in that** the outer peripheral wall (22) and the inner peripheral wall (24) of the housing (16) each comprise a plurality of though-openings (23) through which the wastewater can flow, a drainage layer (29) being arranged in each case between the filter medium (18) and the outer peripheral wall (24) and/or the inner peripheral wall (22), a mesh layer (31) preferably being arranged between the outer peripheral wall (22) and/or the inner peripheral wall (24) and the respective drainage layer (29) associated with said wall (22, 24), which mesh layer has a mesh size that is smaller than the smallest grain size of the filter medium (18) used.

7. Wastewater treatment apparatus according to any of claims 1 to 6, **characterised in that** the partition (32) and/or the base (19; 19') has a positioning aid (21; 21') for facilitating the positioning of the at least one filter device (14; 14'; 14"; 14"'; 14"").

8. Wastewater treatment apparatus according to any of claims 1 to 7, **characterised in that** the wastewater treatment apparatus (10"; 10") further comprises a baffle (9; 9') which is arranged between the wastewater inlet (12", 12'") and the filter device (14", 14'") and which preferably surrounds the filter device (14", 14"') in portions.

9. Wastewater treatment apparatus according to any of claims 1 to 8, **characterised in that** at least one of the at least one filter device (14"; 14"'; 14"") comprises at least two filter units (15; 15'; 15"), each filter unit (15; 15'; 15") comprising a housing unit in which the filter medium (18) for adsorbing and/or absorbing impurities from the wastewater is received, and the at least two filter units (15; 15'; 15") being stacked on top of one another in the vertical direction in the operating state of the wastewater treatment apparatus (10"; 10"'; 10"").

10. Wastewater treatment apparatus according to claim 9, **characterised in that** an intermediate insert (17; 17') is provided between two filter units (15; 15') which are in immediate succession in the vertical direction, which insert is intended for orienting, in particular centring, the two filter units (15; 15'), which are in immediate succession in the vertical direction, relative to one another.

11. Wastewater treatment apparatus according to any of claims 1 to 10, **characterised in that** said apparatus (10"") further comprises, at a point positioned fluidically between the at least one filter device (14"") and the wastewater outlet (40""), at least one seepage outlet that has an opening (60) and is designed such that the at least one filter device (14"") dries out in a time period of from 1 to 24 hours, preferably from 5 to 10 hours, provided that no additional wastewater, in particular rainwater, is supplied to the wastewater treatment apparatus (10"") within said time period.

12. Wastewater treatment apparatus according to any of claims 1 to 11, **characterised in that** said apparatus (10"") also has a spillover threshold (72) fluidically arranged between the wastewater inlet (12"") and the at least one filter device (14""), over which spillover threshold the wastewater to be treated which flows through the wastewater inlet (12"") into the wastewater treatment apparatus (10"") must pass in order to reach the at least one filter device (14""), the spillover threshold (72) being arranged above the upper edge of the housing of the at least one filter device (14"") in the vertical direction, or at least at the same height.

13. Wastewater treatment facility (100) comprising the wastewater treatment apparatus (10) according to any of the preceding claims, and a pretreatment device (140) such as a sedimentation pipe (120), the pretreatment device (140) being fluidically upstream of the wastewater treatment apparatus (10) and being in flow connection with the wastewater inlet (12) of the wastewater treatment apparatus (10).

14. Wastewater treatment facility according to claim 13, **characterised in that** said facility further comprises a rubble drain (130) for seepage of the filtered wastewater, the rubble drain (130) being fluidically downstream of the wastewater treatment apparatus (10) and being in flow connection with the wastewater outlet (40) of the wastewater treatment apparatus (10).

## Revendications

1. Dispositif de traitement des eaux usées (10 ; 10' ; 10" ; 10''' ; 10'''') destiné au traitement des eaux usées, en particulier des eaux de pluie, lequel comprend :
- une arrivée des eaux usées (12 ; 12' ; 12" ; 12"' ; 12"") ;
- une évacuation des eaux usées (40 ; 40" ; 40"' ; 40"") ; et
- tout au moins un dispositif de filtration (14 ; 14' ; 14" ; 14"' ; 14""), lequel est disposé, du point de vue de la technique des fluides, entre l'arrivée des eaux usées (12 ; 12' ; 12" ; 12'" ; 12"") et l'évacuation des eaux usées (40 ; 40" ; 40"' ; 40""), avec un boîtier (16), dans lequel est mis en place un milieu formant filtre (18) en vue de l'adsorption et/ou de l'absorption de corps étrangers provenant des eaux usées ;
selon lequel la paroi du boîtier (16) est seulement conçue de manière à pouvoir être traversée de tous les côtés par les eaux usées à traiter dans la direction horizontale ;
**caractérisé en ce qu'**une arrête (42) inférieure de l'évacuation des eaux usées (40 ; 40" ; 40''' ; 40"") est disposée dans le sens de la hauteur, au-dessus de la bordure (44) supérieure du boîtier (16) du tout au moins un dispositif de filtration (14 ; 14' ; 14" ; 14"' ; 14""), tout au moins, cependant, à la même hauteur ;
selon lequel le dispositif de traitement des eaux usées présente en outre une paroi intermédiaire (32) et/ou un socle (19 ; 19'), sur laquelle, respectivement sur lequel est monté le tout au moins un dispositif de filtration (14 ; 14' ; 14" ; 14"' ; 14"") ;
selon lequel une ouverture prévue dans la paroi intermédiaire (32) et/ou dans le socle (19 ; 19') se trouve en affleurement avec un orifice d'évacuation (30) du tout au moins un dispositif de filtration (14 ; 14' ; 14" ; 14"' ; 14"") ; et
**caractérisé en ce qu'**un tube montant (38) est prévu, lequel est configuré de telle sorte qu'il fait monter entièrement, au-dessous de la paroi intermédiaire (32), respectivement du socle (19 ; 19'), les eaux usées collectées déjà épurées, puis fait saillie vers le haut depuis la paroi intermédiaire (32) et/ou du socle (19 ; 19') et est raccordé à l'évacuation des eaux usées (40 ; 40" ; 40''' ; 40"") ;
selon lequel le tube montant (38) présente une section (46) ouverte vers le bas, laquelle bifurque depuis une section guidant jusqu'à l'évacuation des eaux usées (40 ; 40" ; 40"' ; 40"") ; et
**caractérisé en ce que** le tout au moins un dispositif de filtration (14 ; 14' ; 14" ; 14"' ; 14"") est configuré en vue d'être environné par les eaux usées qui doivent être épurées, le long de toute sa surface circonférentielle (22), autour d'un axe qui court à la verticale.

2. Dispositif de traitement des eaux usées selon la revendication 1, **caractérisé en ce que** le boîtier (16) du tout au moins un dispositif de filtration (14 ; 14' ; 14" ; 14''' ; 14'''') est conçu en forme de cylindre, selon lequel l'axe du cylindre (Z) s'étend pour l'essentiel à la verticale.

3. Dispositif de traitement des eaux usées selon la revendication 1 ou 2, **caractérisé en ce que** le boîtier (16) comprend une paroi circonférentielle (22) externe qui s'étend sur tout le pourtour d'un axe pour l'essentiel vertical, ainsi qu'une paroi circonférentielle (24) interne qui s'étend sur tout le pourtour d'un axe vertical, lesquelles parois forment entre elles un espace de logement pour le milieu formant filtre (18) et lesquelles sont toutes les deux conçues de manière à pouvoir être traversées par les eaux usées ; et
**caractérisé en ce que** le boîtier (16) présente en outre une paroi de délimitation (26) supérieure, laquelle obture le boîtier (16) vers le haut, de manière hermétique aux liquides sur l'intégralité de la surface, tandis qu'une paroi de délimitation (28) inférieure, laquelle est également conçue de manière hermétique aux eaux usées, obture seulement, de manière hermétique aux liquides, l'espace de logement vers le bas.

4. Dispositif de traitement des eaux usées selon la revendication 3, **caractérisé en ce que** la paroi de délimitation (26) supérieure comprend un dispositif d'accrochage (35), par exemple sous la forme d'une bague (35) ou d'une barre en forme d'arceau (50), en vue du relèvement, respectivement de l'abaissement de tout au moins une section du dispositif de filtration (14 ; 14' ; 14" ; 14"' ; 14"") à l'intérieur du dispositif de traitement des eaux usées (10 ; 10' ; 10" ; 10"' ; 10"").

5. Dispositif de traitement des eaux usées selon la revendication 3 ou 4, **caractérisé en ce que** la paroi de délimitation (26) supérieure est conçue sous la forme d'un couvercle amovible par rapport au reste du boîtier (16).

6. Dispositif de traitement des eaux usées selon l'une des revendications 3 à 5, **caractérisé en ce que** la paroi circonférentielle (22) externe et la paroi circonférentielle (24) interne du boîtier (16) présentent respectivement une pluralité de passages traversants (23) qui peuvent être traversées par les eaux usées ;
selon lequel une couche de drainage (29) est disposée respectivement entre le milieu formant filtre (18), d'une part, et la paroi circonférentielle (24) externe et/ou la paroi circonférentielle (22) interne, d'autre part ; et
selon lequel une couche à mailles (31) est disposée, de préférence, entre la paroi circonférentielle (22) externe, respectivement la paroi circonférentielle (24) interne et la couche de drainage (29) respectivement associée à cette cloison (22, 24), laquelle couche à mailles (31) présente une dimension de maillage qui est inférieure à la plus petite dimension des grains du milieu formant filtre (18) utilisé.

7. Dispositif de traitement des eaux usées selon l'une des revendications 1 à 6, **caractérisé en ce que** la paroi intermédiaire (32) et/ou le socle (19 ; 19') présente un moyen d'aide au positionnement (21 ; 21'), en vue de faciliter le positionnement du tout au moins un dispositif de filtration (14, 14' ; 14" ; 14"" ; 14"").

8. Dispositif de traitement des eaux usées selon l'une des revendications 1 à 7, **caractérisé en ce que** le dispositif de traitement des eaux usées (10" ; 10"') comprend en outre une plaque de déflection (9 ; 9'), laquelle est disposée entre l'arrivée des eaux usées (12" ; 12"') et le dispositif de filtration (14" ; 14"') et laquelle entoure, de préférence, le dispositif de filtration (14" ; 14"') par sections.

9. Dispositif de traitement des eaux usées selon l'une des revendications 1 à 8, **caractérisé en ce que** tout au moins l'un des tout au moins un dispositif de filtration (14" ; 14"' ; 14"") comprend au moins deux unités de filtre (15 ; 15' ; 15") ;
selon lequel chaque unité de filtre (15 ; 15' ; 15") présente une unité de boîtier, dans laquelle le milieu formant filtre (18) est mis en place en vue de l'adsorption et/ou de l'absorption des corps étrangers provenant des eaux usées ; et
selon lequel les tout au moins deux unités de filtre (15 ; 15' ; 15") sont empilées l'une au-dessus de l'autre dans la direction verticale, quand le dispositif de traitement des eaux usées (10" ; 10"' ; 10"") est en mode de fonctionnement.

10. Dispositif de traitement des eaux usées selon la revendication 9, **caractérisé en ce qu'**une garniture intercalaire (17 ; 17') est prévue entre deux unités de filtre (15 ; 15') qui se suivent de manière directement successive dans le sens de la hauteur, en vue de l'alignement, en particulier en vue du centrage des deux unités de filtre (15 ; 15'), l'une par rapport à l'autre, lesquelles se suivent de manière directement successive dans le sens de la hauteur.

11. Dispositif de traitement des eaux usées selon l'une des revendications 1 à 10, **caractérisé en ce que** ledit dispositif de traitement des eaux usées (10"") comprend en outre une évacuation d'infiltration au niveau d'un emplacement qui se trouve, du point de vue de la technique des fluides, entre le tout au moins un dispositif de filtration (14"") et l'évacuation des eaux usées (40""), laquelle évacuation d'infiltration présente au moins une ouverture (60) et laquelle est configurée de telle sorte que le tout au moins un dispositif de filtration (14"") devient sec dans un intervalle de temps compris entre 1 et 24 heures, de préférence entre 5 et 10 heures, pour autant que le dispositif de traitement des eaux usées (10"") ne soit pas alimenté en eaux usées, en particulier en eaux de pluie, durant cette période.

12. Dispositif de traitement des eaux usées selon l'une des revendications 1 à 11, **caractérisé en ce que** ledit dispositif de traitement des eaux usées (10"") comprend en outre un seuil de trop-plein (72) qui est disposé, du point de vue de la technique des fluides, entre l'arrivée des eaux usées (12"") et le tout au moins un dispositif de filtration (14""), et par l'intermédiaire duquel les eaux usées entrantes et devant être traitées doivent passer à travers l'arrivée des eaux usées (12"") jusque dans le dispositif de traitement des eaux usées (10""), en vue d'atteindre le tout au moins un dispositif de filtration (14"") ;
selon lequel le seuil de trop-plein (72) est disposé dans le sens de la hauteur, au-dessus de la bordure supérieure du boîtier du tout au moins un dispositif de filtration (14""), tout au moins, cependant, à la même hauteur.

13. Installation de traitement des eaux usées (100), laquelle comprend le dispositif de traitement des eaux usées (10) selon l'une des revendications précédentes, ainsi qu'un dispositif de nettoyage préliminaire (140), lequel se présente par exemple sous la forme d'un tube de sédimentation (120) ;
selon laquelle le dispositif de nettoyage préliminaire (140) est installé, du point de vue de la technique des fluides, en amont du dispositif de traitement des eaux usées (10) et se trouve en communication fluidique avec l'arrivée des eaux usées (12) du dispositif de traitement des eaux usées (10).

14. Installation de traitement des eaux usées (100) selon la revendication 13, **caractérisée en ce que** ladite installation de traitement des eaux usées (100) comprend en outre une rigole (130) servant à l'infiltration des eaux usées filtrées ;
selon laquelle la rigole (130) est installée, du point de vue de la technique des fluides, en aval du dispositif de traitement des eaux usées (10) et se trouve en communication fluidique avec l'évacuation des eaux usées (40) du dispositif de traitement des eaux usées (10).
